(19) Europäisches Patentamt
European Patent Office
Office européen des brevets

(11) **EP 4 644 965 A1**

(12) **EUROPEAN PATENT APPLICATION**
published in accordance with Art. 153(4) EPC

(43) Date of publication:
05.11.2025 Bulletin 2025/45

(21) Application number: 24781345.4

(22) Date of filing: 15.02.2024

(51) International Patent Classification (IPC):
$G02B\ 13/00^{(2006.01)}$    $G02B\ 9/60^{(2006.01)}$
$G03B\ 9/02^{(2021.01)}$    $H04M\ 1/02^{(2006.01)}$
$G02B\ 3/02^{(2006.01)}$    $G02B\ 3/00^{(2006.01)}$

(52) Cooperative Patent Classification (CPC):
G02B 3/00; G02B 3/02; G02B 9/60; G02B 13/00;
G03B 9/02; H04M 1/02

(86) International application number:
PCT/KR2024/095235

(87) International publication number:
WO 2024/205355 (03.10.2024 Gazette 2024/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.03.2023 KR 20230040787
20.04.2023 KR 20230052007

(71) Applicant: Samsung Electronics Co., Ltd.
Suwon-si, Gyeonggi-do 16677 (KR)

(72) Inventor: KIM, Haneung
Suwon-si Gyeonggi-do 16677 (KR)

(74) Representative: HGF
HGF Limited
1 City Walk
Leeds LS11 9DX (GB)

(54) **LENS ASSEMBLY AND ELECTRONIC DEVICE COMPRISING SAME**

(57) A lens assembly and/or an electronic device comprising same, according to one embodiment of the present disclosure, comprises: an image sensor; an aperture; a first lens which includes a convex subject side surface while having a positive refractive power, and which is disposed between the aperture and the image sensor; a second lens which has negative refractive power and which is disposed between the first lens and the image sensor; a third lens disposed between the second lens and the image sensor; a fourth lens disposed between the third lens and the image sensor; and a fifth lens which includes a concave image sensor side surface while having a positive refractive power, and which is disposed between the fourth lens and the image sensor. In one embodiment, the lens assembly can be easily miniaturized by satisfying at least some of the conditions disclosed regarding overall lens length, image height, half field of view, and/or the thickness of the first lens. Other various embodiments are possible.

FIG. 5

## Description

[Technical Field]

Embodiment(s) of the disclosure relate to a lens assembly, for example, a lens assembly including a plurality of lenses and an electronic device including the same.

[Background Art]

Optical devices, for example, cameras capable of capturing images or videos have been widely used, and digital cameras or video cameras with solid-state image sensors such as charge-coupled devices (CCDs) or complementary metal-oxide semiconductors (CMOS) have become common in recent years. Optical devices with solid-state image sensors (CCDs or CMOSs) have been gradually replacing film-based optical devices because they allow for easier storage, duplication, and movement of images than the film-based optical devices.

A plurality of optical devices, for example, two or more selected from a macro camera, a telephoto camera, and/or a wide-angle camera, have recently been mounted in a single electronic device to enhance the quality of captured images and to impart various visual effects to the captured images. For example, object images may be obtained through a plurality of cameras having different optical characteristics and synthesized into a high-quality captured image. As electronic devices such as mobile communication terminals and smartphones are equipped with a plurality of optical devices (e.g., cameras) to obtain high-quality captured images, these electronic devices are gradually replacing electronic devices specialized for shooting functions, such as digital compact cameras, and are expected to potentially replace high-performance cameras such as digital single-lens reflex cameras (DSLRs) in the future.

The above information is presented as related art only to assist with an understanding of the disclosure. No determination has been made, and no assertion is made, as to whether any of the above might be applicable as prior art with regard to the disclosure.

[Detailed Description of the Invention]

[Technical Solution]

According to an embodiment of the disclosure, a lens assembly includes an image sensor, an aperture stop, a first lens having a positive refractive power, including a convex object-side surface, and disposed between the aperture stop and the image sensor, a second lens having a negative refractive power and disposed between the first lens and the image sensor, a third lens disposed between the second lens and the image sensor, a fourth lens disposed between the third lens and the image sensor, and a fifth lens having a positive refractive power, including a concave image sensor-side surface, and disposed between the fourth lens and the image sensor. In an embodiment, the lens assembly satisfies the following [Conditional Expression 1].

$$[\text{Conditional Expression 1}]$$

$$0.8 < TTL/(IH*\tan(HFOV)) < 2$$

Herein, 'TTL' may be a distance from the object-side surface of the first lens to an imaging plane of the image sensor, measured along the optical axis, 'IH' may be a maximum image height of the lens assembly, and 'HFOV' may be a half field of view of the lens assembly.

According to an embodiment of the disclosure, an electronic device includes a lens assembly and a processor configured to obtain an object image using the lens assembly. In an embodiment, the lens assembly includes an image sensor, an aperture stop, a first lens having a positive refractive power, including a convex object-side surface, and disposed between the aperture stop and the image sensor, a second lens having a negative refractive power and disposed between the first lens and the image sensor, a third lens disposed between the second lens and the image sensor, a fourth lens disposed between the third lens and the image sensor, and a fifth lens having a positive refractive power, including a concave image sensor-side surface, and disposed between the fourth lens and the image sensor. In an embodiment, the lens assembly satisfies the following [Conditional Expression 1].

EP 4 644 965 A1

[Conditional Expression 1]

$$0.8 < TTL/(IH*\tan(HFOV)) < 2$$

Herein, 'TTL' may be a distance from the object-side surface of the first lens to an imaging plane of the image sensor, measured along the optical axis, 'IH' may be a maximum image height of the lens assembly, and 'HFOV' may be a half field of view of the lens assembly.

[Brief Description of Drawings]

The above or other aspects, features, and/or advantages of an embodiment of the disclosure may be apparent from the following detailed description taken in conjunction with the accompanying drawings.

FIG. 1 is a block diagram illustrating an electronic device in a network environment according to an embodiment of the disclosure.

FIG. 2 is a block diagram illustrating a camera module according to an embodiment of the disclosure.

FIG. 3 is a front perspective view illustrating an electronic device according to an embodiment of the disclosure.

FIG. 4 is a rear perspective view illustrating an electronic device according to an embodiment of the disclosure.

FIG. 5 is a diagram illustrating a lens assembly according to an embodiment of the disclosure.

FIG. 6 is a graph illustrating spherical aberration of the lens assembly of FIG. 5 according to an embodiment of the disclosure.

FIG. 7 is a graph illustrating astigmatism of the lens assembly of FIG. 5 according to an embodiment of the disclosure.

FIG. 8 is a graph illustrating distortion of the lens assembly of FIG. 5 according to an embodiment of the disclosure.

FIG. 9 is a diagram illustrating a lens assembly according to an embodiment of the disclosure.

FIG. 10 is a graph illustrating spherical aberration of the lens assembly of FIG. 9 according to an embodiment of the disclosure.

FIG. 11 is a graph illustrating astigmatism of the lens assembly of FIG. 9 according to an embodiment of the disclosure.

FIG. 12 is a graph illustrating distortion of the lens assembly of FIG. 9 according to an embodiment of the disclosure.

FIG. 13 is a diagram illustrating a lens assembly according to an embodiment of the disclosure.

FIG. 14 is a graph illustrating spherical aberration of the lens assembly of FIG. 13 according to an embodiment of the disclosure.

FIG. 15 is a graph illustrating astigmatism of the lens assembly of FIG. 13 according to an embodiment of the disclosure.

FIG. 16 is a graph illustrating distortion of the lens assembly of FIG. 13 according to an embodiment of the disclosure.

FIG. 17 is a diagram illustrating a lens assembly according to an embodiment of the disclosure.

FIG. 18 is a graph illustrating spherical aberration of the lens assembly of FIG. 17 according to an embodiment of the disclosure.

FIG. 19 is a graph illustrating astigmatism of the lens assembly of FIG. 17 according to an embodiment of the disclosure.

3

FIG. 20 is a graph illustrating distortion of the lens assembly of FIG. 17 according to an embodiment of the disclosure.

FIG. 21 is a diagram illustrating a lens assembly according to an embodiment of the disclosure.

FIG. 22 is a graph illustrating spherical aberration of the lens assembly of FIG. 21 according to an embodiment of the disclosure.

FIG. 23 is a graph illustrating astigmatism of the lens assembly of FIG. 21 according to an embodiment of the disclosure.

FIG. 24 is a graph illustrating distortion of the lens assembly of FIG. 21 according to an embodiment of the disclosure.

FIG. 25 is a diagram illustrating a lens assembly according to an embodiment of the disclosure.

FIG. 26 is a graph illustrating spherical aberration of the lens assembly of FIG. 25 according to an embodiment of the disclosure.

FIG. 27 is a graph illustrating astigmatism of the lens assembly of FIG. 25 according to an embodiment of the disclosure.

FIG. 28 is a graph illustrating distortion of the lens assembly of FIG. 25 according to an embodiment of the disclosure.

FIG. 29 is a diagram illustrating a lens assembly according to an embodiment of the disclosure.

FIG. 30 is a graph illustrating spherical aberration of the lens assembly of FIG. 29 according to an embodiment of the disclosure.

FIG. 31 is a graph illustrating astigmatism of the lens assembly of FIG. 29 according to an embodiment of the disclosure.

FIG. 32 is a graph illustrating distortion of the lens assembly of FIG. 29 according to an embodiment of the disclosure.

Throughout the accompanying drawings, like reference numerals may be assigned to like parts, components, and/or structures.

[Mode for Carrying out the Invention]

As mentioned above, a miniaturized electronic device such as a smartphone may obtain a high-quality image by including a plurality of cameras or a plurality of lens assemblies. In mounting the plurality of cameras, there may be difficulties in achieving harmony with the external appearance of the electronic device. For example, since an optical path corresponding to each camera should be provided, the arrangement or sizes of a plurality of optical holes may not conform to the external design specifications of the electronic device. By including a camera disposed to overlap with (or below) a display, and/or a camera disposed in parallel to one side of the display depending on the electronic device, a user may make video calls or capture self-portraits. A camera disposed below the display may receive external light passing through the display or an optical hole formed in a partial area of the display. However, when receiving external light passing through the display, the camera may have difficulty obtaining an image of sufficiently good quality, and when an optical hole penetrating a partial area of the display is provided, the screen display area (e.g., active area) of the display may be reduced.

To at least address the above problems and/or disadvantages and at least provide the advantages described below, an embodiment of the disclosure may provide a lens assembly which is one of a plurality of cameras disposed adjacent to each other and which may easily harmonize with the external appearance of an electronic device, and/or an electronic device including the same.

An embodiment of the disclosure may provide a lens assembly which is disposed to overlap with a display while suppressing reduction of an active area of the display, and/or an electronic device including the same.

The technical objects to be achieved by the disclosure are not limited to those mentioned above, and other technical objects not mentioned will be clearly understood by those skilled in the art from the following description.

The following description of the accompanying drawings may provide an understanding of various exemplary implementations of the disclosure including the claims and their equivalents. The exemplary embodiments disclosed in the following description include various specific details to assist in understanding, but it is considered that they are merely one of various exemplary embodiments. Accordingly, those skilled in the art will understand that various changes and modifications may be made to various implementations of the disclosure without departing from the scope and spirit of the disclosure. In addition, a description of well-known functions and configurations will be avoided for clarity and conciseness.

The terms and words used in the following description and the claims are not limited to their dictionary meanings but are used to enable a clear and consistent understanding of an embodiment of the disclosure. Accordingly, it will be obvious to those skilled in the art that the following description of various implementations of the disclosure is provided for illustrative purposes only and not for the purpose of limiting the disclosure as defined by the appended claims and their equivalents.

It is to be understood that the singular forms "a," "an," and "the" are intended to include plural referents as well, unless the context clearly indicates otherwise. Thus, for example, reference to "a component surface" may include reference to one or more surfaces of a component.

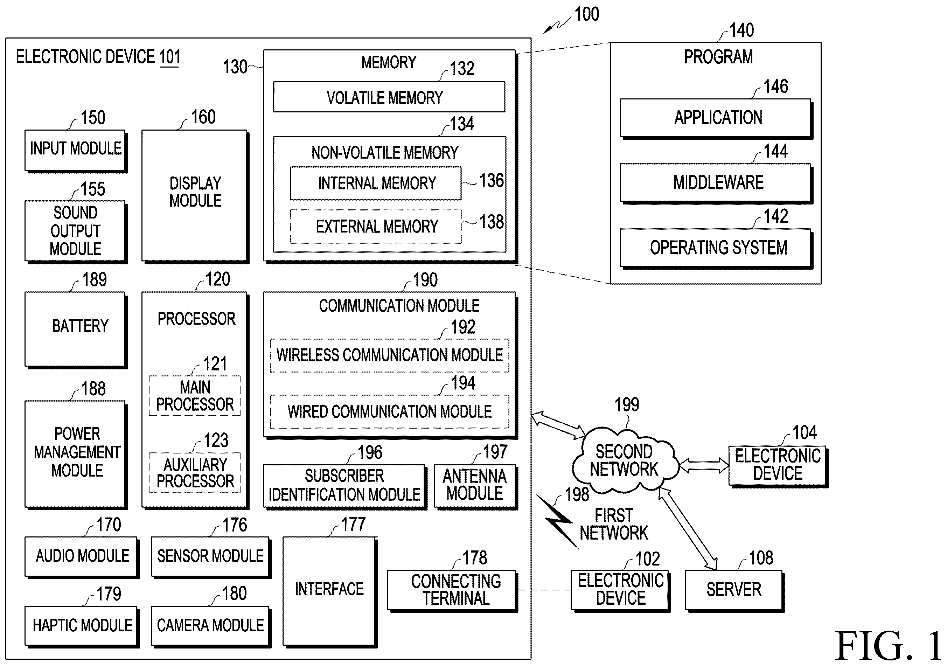

FIG. 1 is a block diagram illustrating an electronic device 101 in a network environment 100 according to an embodiment of the disclosure. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

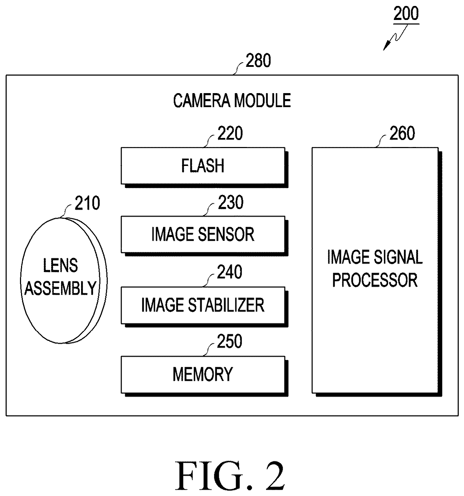

FIG. 2 is a block diagram 200 illustrating a camera module 280 (e.g., the camera module 180 in FIG. 1) according to an embodiment of the disclosure. Referring to FIG. 2, the camera module 280 may include a lens assembly 210, a flash 220, an image sensor 230, an image stabilizer 240, memory 250 (e.g., buffer memory), or an image signal processor 260.

In an embodiment, the lens assembly 210 may include the image sensor 230. The lens assembly 210 may collect light emitted from an object whose image is to be taken. The lens assembly 210 may include one or more lenses. According to an embodiment, the camera module 280 may include a plurality of lens assemblies 210. In such a case, the camera module 280 may form, for example, a dual camera, a 360-degree camera, or a spherical camera. Some of the plurality of lens assemblies 210 may have the same lens attribute (e.g., view angle, focal length, auto-focusing, F-number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 280 or an electronic device 201 including the camera module 280. This allows compensating for at least part of a negative effect by the movement on an image being captured. According to an embodiment, the image stabilizer 240 may sense such a movement by the camera module 280 or an electronic device (e.g., the electronic device 101 in FIG. 1) using a gyro sensor (not shown) or an acceleration sensor (not shown) disposed inside or outside the camera module 280. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160 of FIG. 1. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of a memory (e.g., the memory 130 in FIG. 1) or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 280. An image processed by the image signal processor 260 may be stored back in the memory 250 for further processing, or may be provided to an external component (e.g., the memory 130, the display module 160, the electronic device 102, the electronic device 104, or the server 108 in FIG. 1) outside the camera module 280. According to an embodiment, the image signal processor 260 may be configured as at least part of a processor (e.g., the processor 120 in FIG. 1), or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, an electronic device (e.g., the electronic device 101 in FIG. 1) may include a plurality of camera modules 180 having different attributes or functions. In such a case, at least one of the plurality of camera modules 280 may form, for example, a wide-angle camera and at least another of the plurality of camera modules180 may form a telephoto camera. Similarly, at least one of the plurality of camera modules 280 may form, for example, a front camera and at least another of the plurality of camera modules 180 may form a rear camera.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiment(s) of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) including one or more instructions that are stored in a storage medium (e.g., internal memory or external memory) that is readable by a machine (e.g., an electronic device). For example, a processor (e.g., a processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

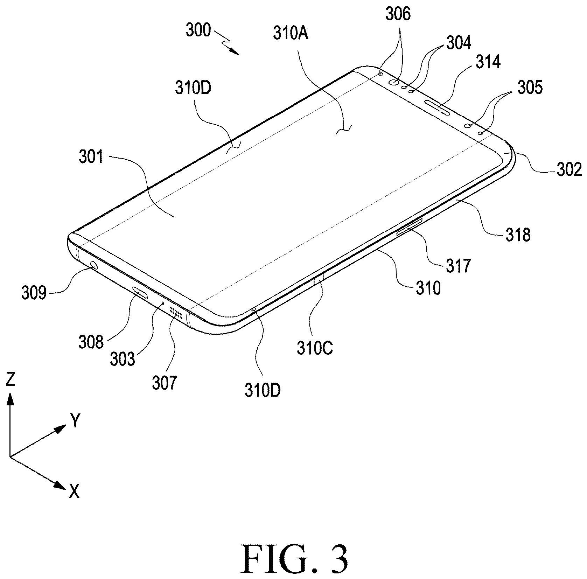

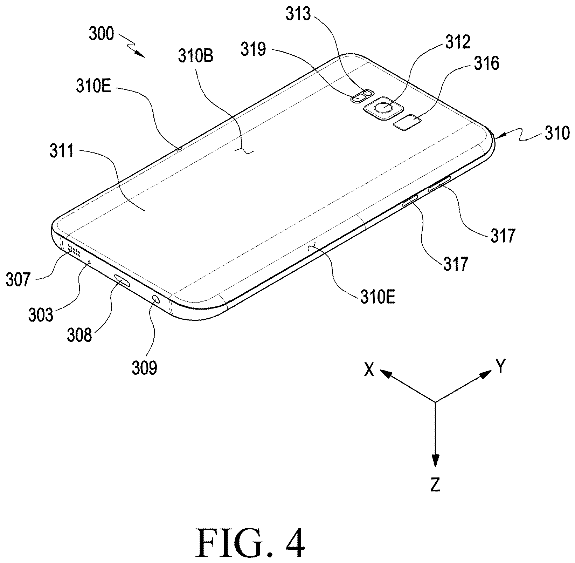

FIG. 3 is a front perspective view illustrating an electronic device 300 (e.g., the electronic device 101 of FIG. 1) according to an embodiment of the disclosure. FIG. 4 is a rear perspective view illustrating the electronic device 300 illustrated in FIG. 3 according to an embodiment of the disclosure.

Referring to FIGS. 3 and 4, the electronic device 300 (e.g., the electronic device 101 of FIG. 1) according to an embodiment may include a housing 310 which includes a first surface (front surface) 310A, a second surface (rear surface) 310B, and a side surface 310C surrounding a space between the first surface 310A and the second surface 310B. In an embodiment (not shown), the housing 310 may refer to a structure that forms a portion of the first surface 310A of FIG. 3, the second surface 310B of FIG. 4, and the side surfaces 310C. According to an embodiment, at least a portion of the first surface 310A may be formed by a front plate 302 (e.g., a glass plate or polymer plate including various coating layers) which is at least partially substantially transparent. In an embodiment, the front plate 302 may be coupled to the housing 310 to form an internal space together with the housing 310. In an embodiment, the term 'internal space' may refer to an internal space of the housing 310 for accommodating at least a portion of a display 301 to be described later or the display module 160 of FIG. 1.

According to an embodiment, the second surface 310B may be formed by a rear plate 311. The rear plate 311 may be formed of, for example, coated or tinted glass, ceramic, a polymer, a metal (e.g., aluminum, stainless steel (STS), or magnesium), or a combination of at least two of these materials. The side surface 310C may be coupled to the front plate 302 and the rear plate 311 and formed by a side bezel structure (or "side member") 318 including a metal and/or a polymer. In an embodiment, the rear plate 311 and the side bezel structure 318 may be integrally formed and include the same material (e.g., a metal material such as aluminum).

In the illustrated embodiment, the front plate 302 may include two first areas 310D, which are bent and extend seamlessly from the first surface 310A toward the rear plate 311, at both long edge ends of the front plate 302. In the illustrated embodiment (see FIG. 4), the rear plate 311 may include two second areas 310E, which are bent and extend seamlessly from the second surface 310B toward the front plate 302, at both long edge ends of the rear plate 311. In an embodiment, the front plate 302 (or the rear plate 311) may include only one of the first areas 310D (or the second areas 310E). In an embodiment, some of the first areas 310D or the second areas 310E may not be included. In the embodiments, when viewed from the sides of the electronic device 101, the side bezel structure 318 may have a first thickness (or width) on a side surface that does not include any of the above first areas 310D or second areas 310E (e.g., a side surface on which a connector hole 308 is formed), and a second thickness less than the first thickness on a side surface that includes the above first areas 310D or second areas 310E (e.g., a side surface on which a key input device 317 is disposed).

According to an embodiment, the electronic device 300 may include at least one of the display 301, audio modules 303, 307, sensor modules 304, 316, and 319, camera modules 305, 312, and 313 (e.g., the camera module 180 or 280 in FIG. 1 or FIG. 2), key input devices 317, or connector holes 308 and 309. In an embodiment, the electronic device 300 may not be provided with at least one (e.g., the key input devices 317 or a light emitting element 306) of the components or may additionally include other components.

The display 301 (e.g., the display module 160 of FIG. 1) may be visually exposed, for example, through a substantial portion of the front plate 302. In an embodiment, at least a portion of the display 301 may be exposed through the first surface 310A and the front plate 302 which forms the first areas 310D of the side surface 310C. In an embodiment, a corner of the display 301 may be formed substantially in the same shape as that of an adjacent periphery of the front plate 302. In an embodiment (not shown), a gap between the periphery of the display 301 and the periphery of the front plate 302 may be substantially equal to increase the visually exposed area of the display 301.

In an embodiment (not shown), a recess or an opening may be formed in a portion of the screen display area (e.g., active area) or an area (e.g., inactive area) outside the screen display area, and at least one of the audio module 314 (e.g., the audio module 170 of FIG. 1), the sensor module 304 (the sensor module 176 of FIG. 1), the camera module 305, or the light emitting element 306, which is aligned with the recess or the opening, may be included. In an embodiment (not shown), at least one of the audio module 314, the sensor module 304, the camera modules 305 (e.g., under display camera (UDC)), a fingerprint sensor 316, or the light emitting element 306 may be included on a rear surface of the screen display area of the display 301. In an embodiment (not shown), the display 301 may be incorporated with or disposed adjacent to a touch sensing circuit, a pressure sensor capable of measuring the intensity (pressure) of a touch, and/or a digitizer that detects a magnetic field-based stylus pen. In an embodiment, at least some of the sensor modules 304 and 319 and/or at least some of the key input devices 317 may be disposed in the first areas 310D and/or the second areas 310E.

The audio modules 303, 307, and 314 may include a microphone hole 303 and speaker holes 307 and 314. A microphone for obtaining an external sound may be disposed in the microphone hole 303, and in an embodiment, a plurality of microphones may be disposed to detect the direction of a sound. The speaker holes 307 and 314 may include an external speaker hole 307 and a receiver hole 314 for calls. In an embodiment, the speaker holes 307 and 314 and the microphone hole 303 may be implemented as a single hole, or a speaker (e.g., a piezo speaker) may be included without the speaker holes 307 and 314.

The sensor modules 304, 316, and 319 may generate an electrical signal or data value corresponding to an internal operating state or external environmental state of the electronic device 300. The sensor modules 304, 316, and 319 may include, for example, a first sensor module 304 (e.g., a proximity sensor) and/or a second sensor module (not shown) (e.g., a fingerprint sensor), disposed on the first surface 310A of the housing 310, and/or a third sensor module 319 (e.g., a HRM sensor) and/or a fourth sensor module 316 (e.g., a fingerprint sensor), disposed on the second surface 310B of the housing 310. The fingerprint sensors may be disposed on the second surface 310B as well as on the first surface 310A (e.g., the display 301) of the housing 310. The electronic device 300 may further include a sensor module which is not shown, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules 305, 312, and 313 may include a front camera module 305 disposed on the first surface 310A of the electronic device 300, and a rear camera module 312 and/or a flash 313 disposed on the second surface 310B. The camera modules 305 and 312 may include one or more lenses, an image sensor, and/or an image signal processor. The flash 313 may include, for example, a light emitting diode (LED) or a xenon lamp. In an embodiment, two or more lenses (an IR camera, a wide-angle lens, and a telephoto lens) and image sensors may be arranged on one surface of the electronic device 300.

The key input devices 317 may be disposed on the side surface 310C of the housing 310. In an embodiment, the electronic device 300 may not include some or any of the key input devices 317, and the key input devices 317 which are not included may be implemented in other forms such as soft keys on the display 301. In an embodiment, the key input devices may include the sensor module 316 disposed on the second surface 310B of the housing 310.

The light emitting element 306 may be disposed, for example, on the first surface 310A of the housing 310. The light emitting element 306 may provide, for example, state information about the electronic device 300 in the form of light. In an embodiment, the light emitting element 306 may provide, for example, a light source interworking with an operation of the front camera module 305. The light emitting element 306 may include, for example, an LED, an IR LED, and a xenon lamp.

The connector holes 308 and 309 may include a first connector hole 308 capable of accommodating a connector (e.g., a USB connector) for transmitting and receiving power and/or data to and from an external electronic device and/or a second connector hole (e.g., an earphone jack) 309 capable of accommodating a connector for transmitting and receiving an audio signal to and from an external electronic device.

In describing the following embodiments, reference may be made to the electronic devices 101, 102, 104, and 300 and/or the camera modules 180, 280, 305, 312, and 313 of the above-described embodiments. Lens assemblies 400, 500, 600, 700, 800, 900, and 1000 in embodiments described below may implement part or the entirety of at least one of the above-described camera modules 180, 280, 305, 312, and 313.

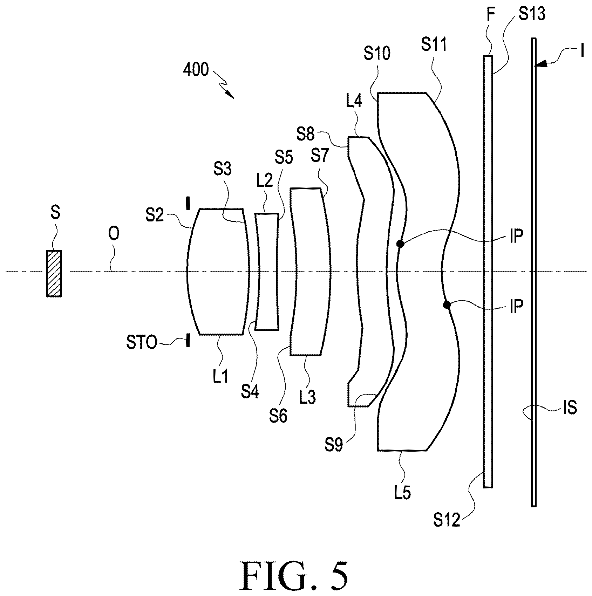

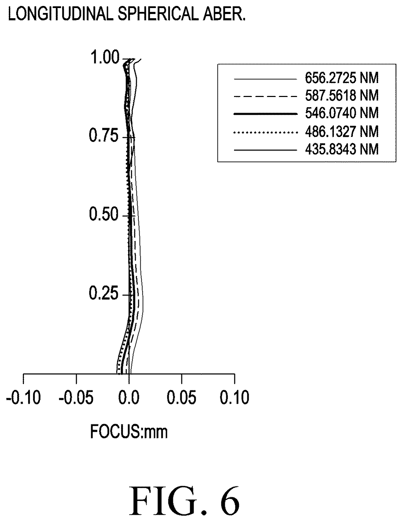

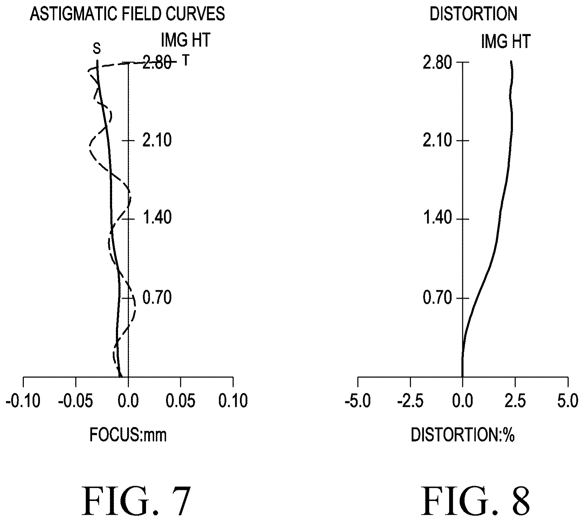

FIG. 5 is a diagram illustrating the lens assembly 400 according to an embodiment of the disclosure. FIG. 6 is a graph illustrating spherical aberration of the lens assembly 400 of FIG. 5 according to an embodiment of the disclosure. FIG. 7 is a graph illustrating astigmatism of the lens assembly 400 of FIG. 5 according to an embodiment of the disclosure. FIG. 8 is a graph illustrating distortion of the lens assembly 400 of FIG. 5 according to an embodiment of the disclosure.

FIG. 6 is a graph illustrating the spherical aberration of the lens assembly 400 according to an embodiment of the disclosure, in which a horizontal axis represents coefficients of longitudinal spherical aberration, a vertical axis represents normalized distances from an optical axis, and variations of the longitudinal spherical aberration according to light wavelengths are illustrated. The longitudinal spherical aberration is shown, for example, for each of light with a wavelength of 656.2725 nanometers (NM) (e.g., red), light with a wavelength of 587.5618NM (e.g., yellow), light with a wavelength of 546.0740NM, light with a wavelength of 486.1372NM (e.g., blue), and light with a wavelength of 435.8343NM. FIG. 7 is a graph illustrating the astigmatism of the lens assembly 400 according to an embodiment of the disclosure, for light with the wavelength of 546.0740NM, in which 'S' represents a sagittal plane with a solid line, and 'T' represents a tangential plane (or meridional plane) with a dotted line. FIG. 8 is a graph illustrating the distortion of the lens assembly 400 according to an embodiment of the disclosure, for light with the wavelength of 546.0740NM.

Referring to FIGS. 5 to 8, the lens assembly 400 (e.g., the lens assembly 210 of FIG. 2) according to an embodiment of the disclosure may include an image sensor I or 230 and at least five lenses L1, L2, L3, L4, and L5. In an embodiment, the at least five lenses L1, L2, L3, L4, and L5 may be disposed between an aperture stop STO and the image sensor I, and include a first lens L1, a second lens L2, a third lens L3, a fourth lens L4, and/or a fifth lens L5 sequentially aligned along an optical axis O from the side of an object S toward the image sensor I or 230. For example, it may be understood that the second lens L2, the third lens L3, the fourth lens L4, and/or the fifth lens L5 is disposed between the first lens L1 and the image sensor I, and that the fourth lens L4 and/or the fifth lens L5 is disposed between the third lens L3 and the image sensor I. In an embodiment, an optical component such as an IR cut filter F may be disposed between any one of the at least five lenses L1, L2, L3, L4, and L5 and the image sensor I or 230. The IR cut filter F may, for example, suppress or block light (e.g., IR light) of a wavelength that is not visible to a user's naked eye but is detected by a photosensitive material of a film or the image sensor I or 230 from entering the image sensor I or 230. This IR cut filter F may be disposed between the fifth lens L5 and the image sensor I or 230. Depending on the usage of the lens assembly 400, the IR cut filter F may be replaced with a band-pass filter that transmits IR light and suppresses or blocks visible light.

In the following detailed description, the first lens L1 may be referred to as the "first object-side lens," and the fifth lens L5 may be referred to as the "first sensor-side lens." In an embodiment, "aligned along the direction of the optical axis O" may refer to alignment such that the optical axes of the lenses L1, L2, L3, L4, and L5 coincide with the optical axis of the image sensor I or 230 (e.g., an imaging plane IS). The imaging plane IS may, for example, receive or detect light aligned or focused by the lenses L1, L2, L3, L4, and L5. In an embodiment, a processor (e.g., the processor 120 of FIG. 1) may perform a focus adjustment operation and/or a focal length adjustment operation by linearly moving at least one of the lenses L1, L2, L3, L4, and L5 relative to the image sensor I or 230 along the direction of the optical axis O.

According to an embodiment, the first lens L1 disposed between the aperture stop STO and the image sensor I may have a positive refractive power and include an object-side surface S2 that is convex toward an object S. The second lens L2 disposed between the first lens L1 and the image sensor I may have a negative refractive power. According to an embodiment, the second lens L2 may be disposed at a distance of approximately 0.55mm or more and 1.4mm or less from the aperture stop STO. For example, the distance from the aperture stop STO to an object-side surface S4 of the second lens L2 may be approximately 0.55mm or more and 1.4mm or less. When the arrangement of the second lens L2 and/or the conditions presented by [Equations] described below are satisfied, the outer diameter of the first lens L1 or a barrel structure fixing the lens(es) of the lens assembly 400 may be reduced. The 'outer diameter of the first lens L1 or the barrel structure' may refer to a portion of the lens assembly 400 that is visually perceived by the user from the outside of the electronic device 300. For example, when one of a plurality of cameras is implemented on the exterior of an electronic device (e.g., the electronic devices 101, 102, 104, 200, and 300 of FIGS. 1 to 4), the lens assembly 400 may have a size that easily harmonizes with the exterior of the electronic device 300. In an embodiment, when the lens assembly 400 is disposed to overlap with a display (e.g., the display 301 of FIG. 3), a good optical path may be provided while suppressing the reduction of the active area of the display.

According to an embodiment, the third lens L3 may be disposed between the second lens L2 and the image sensor I and have a positive refractive power, and the fourth lens L4 may have a negative refractive power and be disposed between the third lens L3 and the image sensor I. In an embodiment, the third lens L3 may have a shape with a convex image sensor-side surface S7. In an embodiment, the fifth lens L5 may have a positive refractive power and be disposed between the fourth lens L4 and the image sensor I. According to an embodiment, the fifth lens L5 may include at least one inflection point IP disposed on at least one of an object-side surface S10 or an image sensor-side surface S11. In an embodiment, the fifth lens L5 may have a shape convex toward the object S by including the convex object-side surface S10 and the concave image sensor-side surface S11.

According to an embodiment, the lens assembly 400 may include the first lens L1 or barrel structure with a reduced outer diameter by satisfying the condition presented through the following [Equation 1]. In an embodiment, when the distance from the aperture stop STO to the object-side surface S4 of the second lens L2 is approximately 0.55mm or more and 1.4mm or less while satisfying the condition presented through [Equation 1], the lens assembly 400 may include the first lens L1 or barrel structure with a further reduced outer diameter. In reducing the outer diameter of the first lens L1 or the barrel structure, the distance from the aperture stop STO to the object-side surface S4 of the second lens L2 may be approximately 0.85mm or less.

$$[\text{Equation 1}]$$
$$0.8 < \frac{TTL}{IH * \tan(HFOV)} < 2$$

Herein, 'TTL' may refer to a total lens length, which is a distance from the object-side surface S2 of the first lens L1 to the imaging plane IS of the image sensor I, measured along the optical axis O. In an embodiment, 'IH' may be a maximum image height of the lens assembly 400, and 'HFOV' may refer to a half field of view of the lens assembly 400.

According to an embodiment, when the distance from the lens assembly 400 and/or the aperture stop STO to the object-side surface S4 of the second lens L2 satisfies the condition presented through the following [Equation 2], it may be easy to reduce the outer diameter of the first lens L1 or the barrel structure.

$$[\text{Equation 2}]$$
$$0.13 < \frac{D4}{TTL} < 0.37$$

Herein, 'D4' may refer to the distance from the aperture stop STO to the object-side surface S4 of the second lens L2. In an embodiment, a calculated value according to [Equation 2] may be in a range of approximately 0.14 or more and approximately 0.30 or less.

According to an embodiment, the first lens L1 may have a larger center thickness than the other lenses L2, L3, L4, and L5. When the first lens L1 has a larger center thickness than the other lenses L2, L3, L4, and L5, the lens assembly 400 may have a good field of view in a structure where the outer diameter of the first lens L1 or the barrel structure is reduced. For example, the lens assembly 400 may have a good field of view while being miniaturized, by satisfying at least one of the following [Equation 3] and/or [Equation 4] regarding the center thickness T1 of the first lens L1.

$$[\text{Equation 3}]$$
$$0.40 < \frac{T1}{T2 + T3 + T4 + T5} < 0.65$$

$$[\text{Equation 4}]$$
$$0.15 < \frac{T1}{TTL} < 0.25$$

Herein, 'T2', 'T3', 'T4', and/or 'T5' may represent the center thicknesses of the second lens L2, the third lens L3, the fourth lens L4, and/or the fifth lens L5, respectively.

In an embodiment, the lens assembly 400 may have a good field of view while reducing its size exposed on the exterior of the electronic device 300 by satisfying at least some of the above-described conditions. For example, the lens assembly 400 may enhance the aesthetic appearance of the electronic device 300, while implementing any one of a plurality of cameras. In an embodiment, the lens assembly 400 may obtain a good quality image while suppressing the reduction of the active area of the display 301 through implementation of a camera disposed to overlap with the display 301 by satisfying at least some of the above-described conditions.

In the above-described embodiment, although some of the reference numerals assigned to the lens surfaces of FIG. 5 are not directly mentioned, those skilled in the art will easily understand the configuration of each of the lenses L1, L2, L3, L4, and L5 based on lens data presented through [Tables] described below. In describing various embodiments below, reference numerals for some of the object-side surface(s) and image sensor-side surface(s) and/or inflection points IP of the lenses L1, L2, L3, L4, and L5 may be omitted in the drawings, for the sake of brevity in the drawings. The reference numerals for the lens surfaces omitted in the drawings may follow the configuration of the above-described embodiment, and may be easily understood through [Tables] described below regarding the lens data of each embodiment. In the detailed description of embodiment(s) of the disclosure, 'concave' or 'convex' used to describe the object-side surfaces or sensor-side surfaces of the lenses L1, L2, L3, L4, and L5 may refer to the shape of a lens surface at a point intersecting the optical axis O or in a paraxial region intersecting the optical axis O.

According to an embodiment, the lens assembly 400 may have a focal length of approximately 3.25mm and an F-number of approximately 2.27. In an embodiment, the lens assembly 400 may satisfy at least some of the condition(s) presented regarding the shapes and refractive powers of the above-described lens(es) L1, L2, L3, L4, and L5 (e.g., lens surfaces), a total lens length, a maximum image height, a half field of view, the thickness of the first lens L1, and/or the distance between the aperture stop STO and the second lens L2, and may be manufactured to the specifications illustrated in the following [Table 1].

[Table 1]

| Lens surface (Surf) | Radius of curvature (Radius) | Thickness (Thick) | Focal length (EFL) | Refractive index (nd) | Abbe number (vd) |
|---|---|---|---|---|---|
| obj(S) | infinity | infinity | | | |
| sto | infinity | -0.02000 | | | |
| S2 | 1.601 | 0.734 | 2.658 | 1.544 | 56.09 |
| S3 | -13.158 | 0.126 | | | |
| S4 | -5.747 | 0.200 | -6.854 | 1.661 | 20.37 |
| S5 | 22.849 | 0.241 | | | |
| S6 | -18.937 | 0.395 | 87.884 | 1.544 | 56.09 |
| S7 | -13.682 | 0.316 | | | |
| S8 | 28.044 | 0.353 | -8.979 | 1.635 | 23.89 |
| S9 | 4.753 | 0.124 | | | |
| S10 | 0.877 | 0.529 | 10.150 | 1.535 | 55.71 |
| S11 | 0.824 | 0.230 | | | |
| S12 | | 0.110 | | 1.517 | 64.2 |
| S13 | | 0.637 | | | |
| img(IS) | infinity | 0.006 | | | |

The following [Table 2] and [Table 3] describe aspheric coefficients of the lenses L1, L2, L3, L4, and L5, and An aspheric surface may be defined by the following [Equation 5].

[Equation 5]

$$z = \frac{c'y^2}{1+\sqrt{1-(k+1)c'^2y^2}} + Ay^4 + By^6 + Cy^8 + Dy^{10} + Ey^{12} + Fy^{14} + Gy^{16} + Hy^{18} + Jy^{20} + Ky^{22} + Ly^{24} + My^{26} + Ny^{28} + Oy^{30}$$

In [Equation 5], "z" may represent a distance from a point of a lens surface where the optical axis O passes in the direction of the optical axis O, "y" may represent a distance from the optical axis O in a direction perpendicular to the optical axis O, 'c' may represent the reciprocal of a radius of curvature at the vertex of a lens, 'k' may represent a Conic constant, and each of 'A', 'B', 'C', 'D', 'E', 'F', 'G', 'H', 'J', 'K', 'L', 'M', 'N', and 'O' may represent an aspheric coefficient. The 'reciprocal of the radius of curvature' may represent a value (e.g., curvature) indicating the degree of curvature at each point of a curved surface or a curve.

[Table 2]

| Lens surface (Surf) | S2_ASP | S3_ASP | S4_ASP | S5_ASP | S6_ASP |
|---|---|---|---|---|---|
| k(Conic) | -1.1574E+00 | 0.0000E+00 | 3.3501E+01 | 8.6075E+01 | 6.1187E+01 |
| A(4th)/C4 | -5.7664E-02 | -1.8793E-01 | -5.8003E-02 | 1.0373E-01 | 1.1794E-01 |
| B(6th)/C5 | 1.3984E+00 | -4.3969E-01 | -2.5283E-01 | -9.9596E-01 | -3.7651E+00 |
| C(8th)/C6 | -1.9303E+01 | 4.0219E+00 | 2.5518E+00 | 8.9492E+00 | 4.2541E+01 |
| D(10th)/C7 | 1.5346E+02 | -2.7023E+01 | -1.0444E+01 | -4.5181E+01 | -3.5654E+02 |
| E(12th)/C8 | -7.6831E+02 | 1.2218E+02 | 2.9788E+01 | 1.4227E+02 | 2.0679E+03 |
| F(14th)/C9 | 2.4738E+03 | -3.5323E+02 | -5.3492E+01 | -2.7402E+02 | -8.2098E+03 |
| G(16th)/C10 | -5.1076E+03 | 6.2990E+02 | 5.6358E+01 | 2.9411E+02 | 2.2219E+04 |
| H(18th)/C11 | 6.5194E+03 | -6.2973E+02 | -2.7066E+01 | -1.3492E+02 | -4.0296E+04 |
| J(20th)/C12 | -4.6711E+03 | 2.6891E+02 | 0.0000E+00 | 0.0000E+00 | 4.6809E+04 |
| K(22th)/C13 | 1.4321E+03 | 0.0000E+00 | 0.0000E+00 | 0.0000E+00 | -3.1438E+04 |
| L(24th)/C 14 | 0.0000E+00 | 0.0000E+00 | 0.0000E+00 | 0.0000E+00 | 9.2684E+03 |
| M(26th)/C15 | 0.0000E+00 | 0.0000E+00 | 0.0000E+00 | 0.0000E+00 | 0.0000E+00 |
| N(28th)/C16 | 0.0000E+00 | 0.0000E+00 | 0.0000E+00 | 0.0000E+00 | 0.0000E+00 |
| O(30th)/C17 | 0.0000E+00 | 0.0000E+00 | 0.0000E+00 | 0.0000E+00 | 0.0000E+00 |

[Table 3]

| Lens surface (Surf) | S7_ASP | S8_ASP | S9_ASP | S10_ASP | S11_ASP |
|---|---|---|---|---|---|
| k(Conic) | 5.5079E+01 | 9.7461E+01 | 5.9090E+00 | -2.5162E+00 | -1.1031E+00 |
| A(4th)/C4 | 3.2162E-01 | 9.2285E-01 | 3.8183E-02 | -8.9692E-01 | -8.5786E-01 |
| B(6th)/C5 | -2.4237E+00 | -3.5501E+00 | 3.0869E-01 | 1.6717E+00 | 1.1464E+00 |
| C(8th)/C6 | 8.7781E+00 | 1.2327E+01 | 6.0154E-01 | -2.4615E+00 | -1.2705E+00 |
| D(10th)/C7 | -2.7659E+01 | -3.7929E+01 | -8.8606E+00 | 2.5505E+00 | 1.0133E+00 |
| E(12th)/C8 | 7.5223E+01 | 8.8036E+01 | 2.7752E+01 | -2.4181E+00 | -5.8593E-01 |
| F(14th)/C9 | -1.5694E+02 | -1.4781E+02 | -4.8699E+01 | 2.3038E+00 | 2.6203E-01 |
| G(16th)/C10 | 2.3181E+02 | 1.7872E+02 | 5.6243E+01 | -1.7762E+00 | -9.7353E-02 |
| H(18th)/C11 | -2.3107E+02 | -1.5529E+02 | -4.5197E+01 | 9.5878E-01 | 3.0762E-02 |
| J(20th)/C12 | 1.4729E+02 | 9.5917E+01 | 2.5750E+01 | -3.4798E-01 | -7.8537E-03 |
| K(22th)/C13 | -5.4125E+01 | -4.1060E+01 | -1.0375E+01 | 8.3223E-02 | 1.4817E-03 |
| L(24th)/C 14 | 8.7158E+00 | 1.1575E+01 | 2.8912E+00 | -1.2594E-02 | -1.8742E-04 |
| M(26th)/C15 | 0.0000E+00 | -1.9318E+00 | -5.2986E-01 | 1.0944E-03 | 1.3966E-05 |
| N(28th)/C16 | 0.0000E+00 | 1.4456E-01 | 5.7416E-02 | -4.1653E-05 | -4.6004E-07 |
| O(30th)/C17 | 0.0000E+00 | 0.0000E+00 | -2.7852E-03 | 0.0000E+00 | 0.0000E+00 |

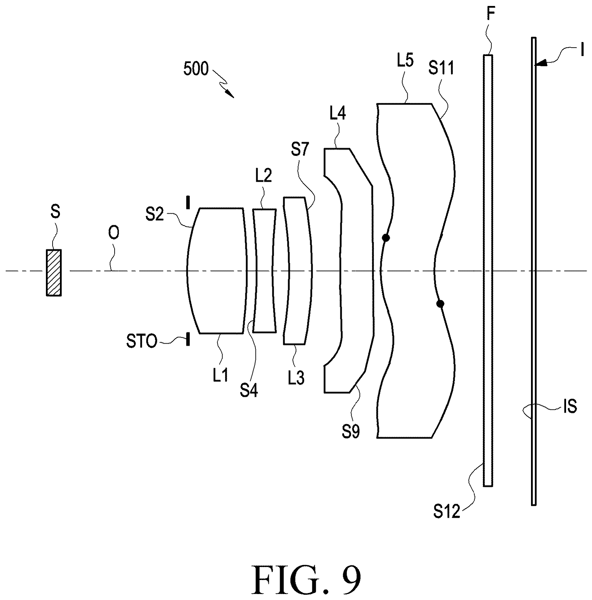

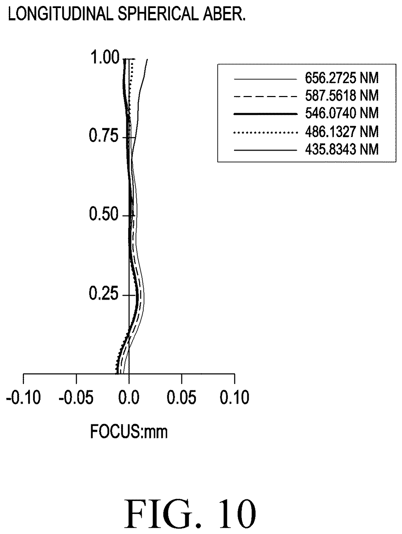

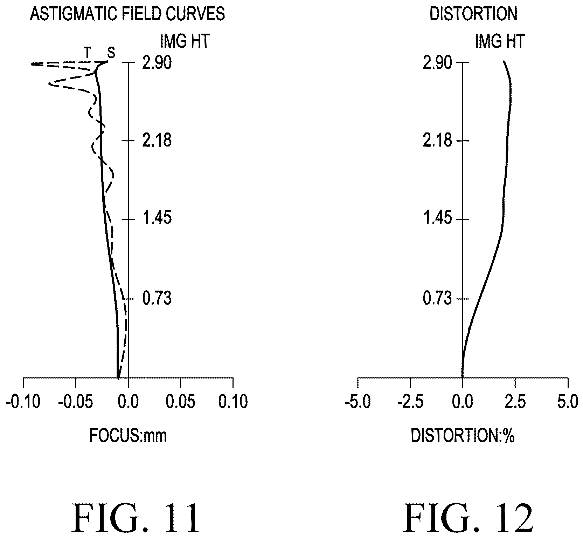

FIG. 9 is a diagram illustrating the lens assembly 500 according to an embodiment of the disclosure. FIG. 10 is a graph illustrating spherical aberration of the lens assembly 500 of FIG. 9 according to an embodiment of the disclosure. FIG. 11 is a graph illustrating astigmatism of the lens assembly 500 of FIG. 9 according to an embodiment of the disclosure.

FIG. 12 is a graph illustrating distortion of the lens assembly 500 of FIG. 9 according to an embodiment of the disclosure.

The lens assembly 500 of FIG. 9 may have a focal length of approximately 3.28mm and an F-number of approximately 2.21. In an embodiment, the lens assembly 500 may satisfy at least some of the condition(s) presented regarding the shapes and refractive powers of the above-described lens(es) L1, L2, L3, L4, and L5 (e.g., lens surfaces), a total lens length, a maximum image height, a half field of view, the thickness of the first lens L1, and/or the distance between the aperture stop STO and the second lens L2. In an embodiment, the lens assembly 500 may be manufactured to the specifications illustrated in the following [Table 4] and have the aspheric coefficients of [Table 5] and [Table 6].

[Table 4]

| Lens surface (Surf) | Radius of curvature (Radius) | Thickness (Thick) | Focal length (EFL) | Refractive index (nd) | Abbe number (vd) |
|---|---|---|---|---|---|
| obj(S) | infinity | infinity | | | |
| sto | infinity | -0.020 | | | |
| S2 | 1.585 | 0.738 | 3.095 | 1.544 | 56.09 |
| S3 | 21.017 | 0.114 | | | |
| S4 | -144.061 | 0.200 | -7.883 | 1.661 | 20.37 |
| S5 | 5.470 | 0.199 | | | |
| S6 | 32.841 | 0.279 | 14.684 | 1.544 | 56.09 |
| S7 | -10.588 | 0.357 | | | |
| S8 | -2.856 | 0.395 | -5.216 | 1.635 | 23.89 |
| S9 | -20.628 | 0.079 | | | |
| S10 | 0.867 | 0.659 | 5.052 | 1.535 | 55.71 |
| S11 | 0.935 | 0.570 | | | |
| S12 | Infinity | 0.110 | | 1.517 | 64.2 |
| S13 | Infinity | 0.402 | | | |
| img(IS) | infinity | 0.011 | | | |

[Table 5]

| Lens surface (Surf) | S2_ASP | S3_ASP | S4_ASP | S5_ASP | S6_ASP |
|---|---|---|---|---|---|
| k(Conic) | -6.9416E-01 | 0.0000E+00 | -9.8000E+01 | -5.5662E+01 | 6.1187E+01 |
| A(4th)/C4 | -6.0591E-02 | -1.1041E-01 | -5.5473E-02 | 1.5591E-01 | 2.3647E-01 |
| B(6th)/C5 | 1.2357E+00 | -9.1735E-01 | -1.2166E+00 | -1.5207E+00 | -2.4878E+00 |
| C(8th)/C6 | -1.2976E+01 | 7.0153E+00 | 8.3028E+00 | 9.0076E+00 | 9.3084E+00 |
| D(10th)/C7 | 7.7034E+01 | -3.7077E+01 | -3.5026E+01 | -3.2344E+01 | -2.1875E+01 |
| E(12th)/C8 | -2.7601E+02 | 1.2421E+02 | 9.0963E+01 | 7.1893E+01 | 1.7854E+01 |
| F(14th)/C9 | 5.9288E+02 | -2.6147E+02 | -1.3939E+02 | -9.7588E+01 | 1.0212E+02 |
| G(16th)/C10 | -7.0627E+02 | 3.3825E+02 | 1.1688E+02 | 7.4095E+01 | -5.3481E+02 |
| H(18th)/C11 | 3.2994E+02 | -2.4662E+02 | -4.1883E+01 | -2.4434E+01 | 1.2959E+03 |
| J(20th)/C12 | 1.2752E+02 | 7.7499E+01 | 0.0000E+00 | 0.0000E+00 | -1.7971E+03 |
| K(22th)/C13 | -1.4204E+02 | 0.0000E+00 | 0.0000E+00 | 0.0000E+00 | 1.3615E+03 |
| L(24th)/C14 | 0.0000E+00 | 0.0000E+00 | 0.0000E+00 | 0.0000E+00 | -4.3698E+02 |
| M(26th)/C15 | 0.0000E+00 | 0.0000E+00 | 0.0000E+00 | 0.0000E+00 | 0.0000E+00 |
| N(28th)/C16 | 0.0000E+00 | 0.0000E+00 | 0.0000E+00 | 0.0000E+00 | 0.0000E+00 |
| O(30th)/C17 | 0.0000E+00 | 0.0000E+00 | 0.0000E+00 | 0.0000E+00 | 0.0000E+00 |

[Table 6]

| Lens surface (Surf) | S7_ASP | S8_ASP | S9_ASP | S10_ASP | S11_ASP |
|---|---|---|---|---|---|
| k(Conic) | 9.8000E+01 | -2.3820E+01 | 5.5251E+01 | -1.8835E+00 | -1.0221E+00 |
| A(4th)/C4 | 4.6890E-01 | 1.0710E+00 | 5.7837E-02 | -9.2398E-01 | -6.0613E-01 |
| B(6th)/C5 | -2.3391E+00 | -4.0571E+00 | 3.4236E-01 | 2.2178E+00 | 7.5593E-01 |
| C(8th)/C6 | 3.2683E+00 | 1.3670E+01 | -1.0759E-02 | -4.8268E+00 | -1.0093E+00 |
| D(10th)/C7 | 1.2784E+01 | -4.0630E+01 | -5.6705E+00 | 7.7171E+00 | 1.1245E+00 |
| E(12th)/C8 | -1.0005E+02 | 9.1874E+01 | 2.0974E+01 | -8.7654E+00 | -9.5089E-01 |
| F(14th)/C9 | 3.4334E+02 | -1.4964E+02 | -4.1718E+01 | 7.0181E+00 | 5.8880E-01 |
| G(16th)/C10 | -7.3044E+02 | 1.7072E+02 | 5.4105E+01 | -3.9624E+00 | -2.6358E-01 |
| H(18th)/C11 | 1.0043E+03 | -1.3251E+02 | -4.8563E+01 | 1.5794E+00 | 8.4631E-02 |
| J(20th)/C12 | -8.6751E+02 | 6.6449E+01 | 3.0788E+01 | -4.4176E-01 | -1.9238E-02 |
| K(22th)/C13 | 4.2827E+02 | -1.9120E+01 | -1.3772E+01 | 8.4879E-02 | 3.0155E-03 |
| L(24th)/C 14 | -9.2086E+01 | 1.9840E+00 | 4.2567E+00 | -1.0680E-02 | -3.0962E-04 |
| M(26th)/C15 | 0.0000E+00 | 3.5360E-01 | -8.6554E-01 | 7.9319E-04 | 1.8726E-05 |
| N(28th)/C16 | 0.0000E+00 | -8.4609E-02 | 1.0422E-01 | -2.6389E-05 | -5.0546E-07 |
| O(30th)/C17 | 0.0000E+00 | 0.0000E+00 | -5.6309E-03 | 0.0000E+00 | 0.0000E+00 |

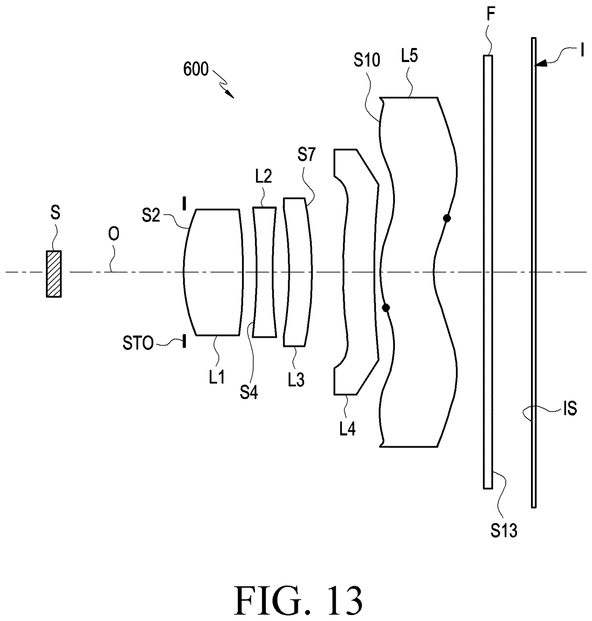

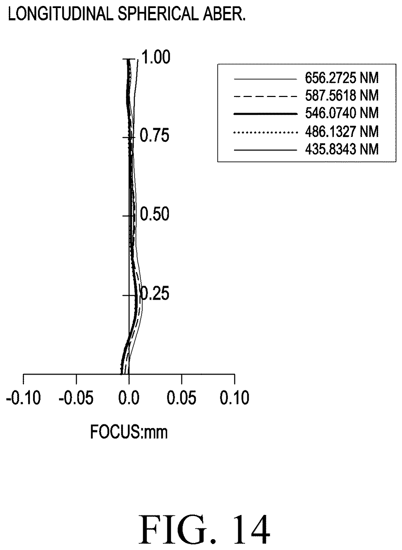

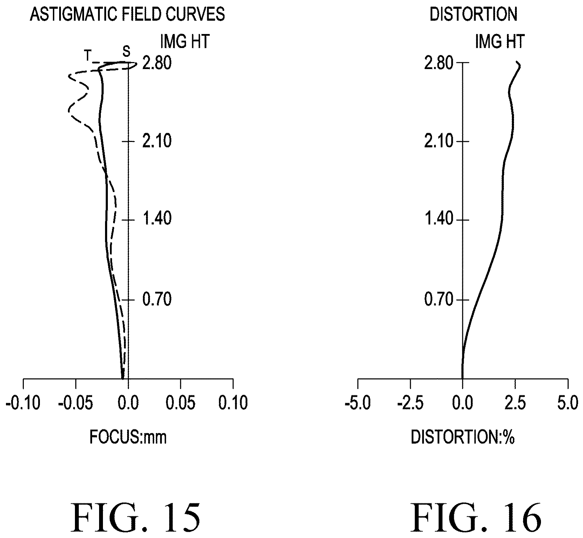

FIG. 13 is a diagram illustrating the lens assembly 600 according to an embodiment of the disclosure. FIG. 14 is a graph illustrating spherical aberration of the lens assembly 600 of FIG. 13 according to an embodiment of the disclosure. FIG. 15 is a graph illustrating astigmatism of the lens assembly 600 of FIG. 13 according to an embodiment of the disclosure. FIG. 16 is a graph illustrating distortion of the lens assembly 600 of FIG. 13 according to an embodiment of the disclosure.

The lens assembly 600 of FIG. 13 may have a focal length of approximately 2.97mm and an F-number of approximately 2.24. In an embodiment, the lens assembly 600 may satisfy at least some of the condition(s) presented regarding the shapes and refractive powers of the above-described lens(es) L1, L2, L3, L4, and L5 (e.g., lens surfaces), a total lens length, a maximum image height, a half field of view, the thickness of the first lens L1, and/or the distance between the aperture stop STO and the second lens L2. In an embodiment, the lens assembly 600 may be manufactured to the specifications illustrated in the following [Table 7] and have the aspheric coefficients of [Table 8] and [Table 9].

[Table 7]

| Lens surface (Surf) | Radius of curvature (Radius) | Thickness (Thick) | Focal length (EFL) | Refractive index (nd) | Abbe number (vd) |
|---|---|---|---|---|---|
| obj(S) | infinity | infinity | | | |
| sto | infinity | -0.020 | | | |
| S2 | 1.967 | 0.738 | 3.400 | 1.544 | 56.09 |
| S3 | -29.042 | 0.114 | | | |
| S4 | 5.839 | 0.200 | -7.804 | 1.661 | 20.37 |
| S5 | 2.717 | 0.199 | | | |
| S6 | 10.769 | 0.284 | 9.028 | 1.544 | 56.09 |
| S7 | -9.019 | 0.382 | | | |
| S8 | -2.681 | 0.356 | -4.930 | 1.635 | 23.89 |
| S9 | -18.574 | 0.050 | | | |
| S10 | 0.764 | 0.646 | 3.946 | 1.535 | 55.71 |
| S11 | 0.841 | 0.600 | | | |

(continued)

| Lens surface (Surf) | Radius of curvature (Radius) | Thickness (Thick) | Focal length (EFL) | Refractive index (nd) | Abbe number (vd) |
|---|---|---|---|---|---|
| S12 | infinity | 0.110 | | 1.517 | 64.2 |
| S13 | infinity | 0.316 | | | |
| img(IS) | infinity | 0.007 | | | |

[Table 8]

| Lens surface (Surf) | S2_ASP | S3_ASP | S4_ASP | S5_ASP | S6_ASP |
|---|---|---|---|---|---|
| k(Conic) | -1.1148E+00 | 0.0000E+00 | -9.9000E+01 | -4.2815E+01 | 6.1187E+01 |
| A(4th)/C4 | -1.0318E-01 | -2.3689E-01 | -2.2479E-01 | 1.4161E-01 | 6.5222E-02 |
| B(6th)/C5 | 2.2156E+00 | 5.7819E-02 | -4.6291E-01 | -1.2473E+00 | -7.9261E-01 |
| C(8th)/C6 | -3.1488E+01 | 1.0935E-01 | 4.9792E+00 | 6.5783E+00 | -4.2821E+00 |
| D(10th)/C7 | 2.6117E+02 | -2.2424E+00 | -2.7676E+01 | -2.4666E+01 | 6.0492E+01 |
| E(12th)/C8 | -1.3616E+03 | 1.2884E+01 | 9.0266E+01 | 5.8621E+01 | -3.2356E+02 |
| F(14th)/C9 | 4.5610E+03 | -3.5670E+01 | -1.7199E+02 | -8.6805E+01 | 1.0536E+03 |
| G(16th)/C10 | -9.7586E+03 | 5.1921E+01 | 1.7914E+02 | 7.2473E+01 | -2.3010E+03 |
| H(18th)/C11 | 1.2809E+04 | -3.6702E+01 | -7.9915E+01 | -2.5674E+01 | 3.4264E+03 |
| J(20th)/C12 | -9.3152E+03 | 7.9526E+00 | 0.0000E+00 | 0.0000E+00 | -3.3846E+03 |
| K(22th)/C13 | 2.8365E+03 | 0.0000E+00 | 0.0000E+00 | 0.0000E+00 | 2.0246E+03 |
| L(24th)/C 14 | 0.0000E+00 | 0.0000E+00 | 0.0000E+00 | 0.0000E+00 | -5.5699E+02 |
| M(26th)/C15 | 0.0000E+00 | 0.0000E+00 | 0.0000E+00 | 0.0000E+00 | 0.0000E+00 |
| N(28th)/C16 | 0.0000E+00 | 0.0000E+00 | 0.0000E+00 | 0.0000E+00 | 0.0000E+00 |
| O(30th)/C17 | 0.0000E+00 | 0.0000E+00 | 0.0000E+00 | 0.0000E+00 | 0.0000E+00 |

[Table 9]

| Lens surface (Surf) | S7_ASP | S8_ASP | S9_ASP | S10_ASP | S11_ASP |
|---|---|---|---|---|---|
| k(Conic) | 3.5650E+01 | -4.1039E+01 | 9.9000E+01 | -1.9220E+00 | -1.0658E+00 |
| A(4th)/C4 | 3.4238E-01 | 1.3438E+00 | 3.6552E-01 | -8.8887E-01 | -6.5767E-01 |
| B(6th)/C5 | -1.5972E+00 | -5.0158E+00 | -4.3564E-01 | 2.0079E+00 | 7.7281E-01 |
| C(8th)/C6 | -1.8066E+00 | 1.4662E+01 | 6.8114E-01 | -4.2248E+00 | -8.9554E-01 |
| D(10th)/C7 | 3.6174E+01 | -3.2680E+01 | -1.8335E+00 | 6.7741E+00 | 8.5530E-01 |
| E(12th)/C8 | -1.7045E+02 | 4.6285E+01 | 2.1113E+00 | -7.9808E+00 | -6.3688E-01 |
| F(14th)/C9 | 4.8958E+02 | -2.5390E+01 | 1.1884E+00 | 6.7398E+00 | 3.6068E-01 |
| G(16th)/C10 | -9.5298E+02 | -4.1369E+01 | -6.9929E+00 | -4.0331E+00 | -1.5316E-01 |
| H(18th)/C11 | 1.2630E+03 | 1.0992E+02 | 1.0437E+01 | 1.7041E+00 | 4.8212E-02 |
| J(20th)/C12 | -1.0928E+03 | -1.2194E+02 | -8.9512E+00 | -5.0459E-01 | -1.1048E-02 |
| K(22th)/C13 | 5.5670E+02 | 7.8987E+01 | 4.9406E+00 | 1.0250E-01 | 1.7833E-03 |
| L(24th)/C 14 | -1.2627E+02 | -3.0720E+01 | -1.7847E+00 | -1.3616E-02 | -1.9123E-04 |
| M(26th)/C15 | 0.0000E+00 | 6.6486E+00 | 4.0846E-01 | 1.0665E-03 | 1.2169E-05 |
| N(28th)/C16 | 0.0000E+00 | -6.1583E-01 | -5.3778E-02 | -3.7373E-05 | -3.4625E-07 |

(continued)

| Lens surface (Surf) | S7_ASP | S8_ASP | S9_ASP | S10_ASP | S11_ASP |
|---|---|---|---|---|---|
| O(30th)/C17 | 0.0000E+00 | 0.0000E+00 | 3.1033E-03 | 0.0000E+00 | 0.0000E+00 |

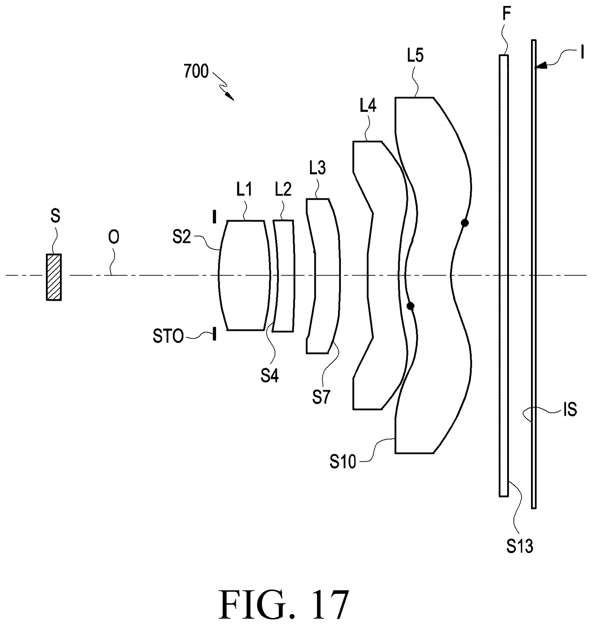

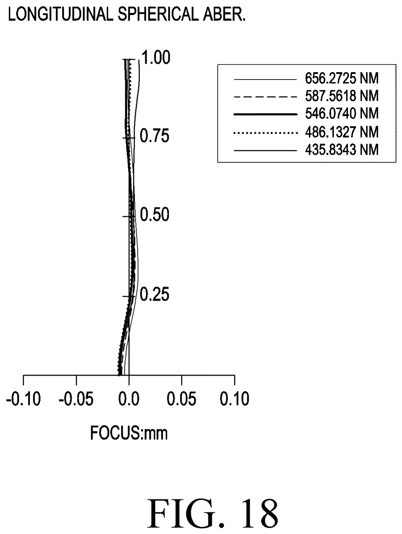

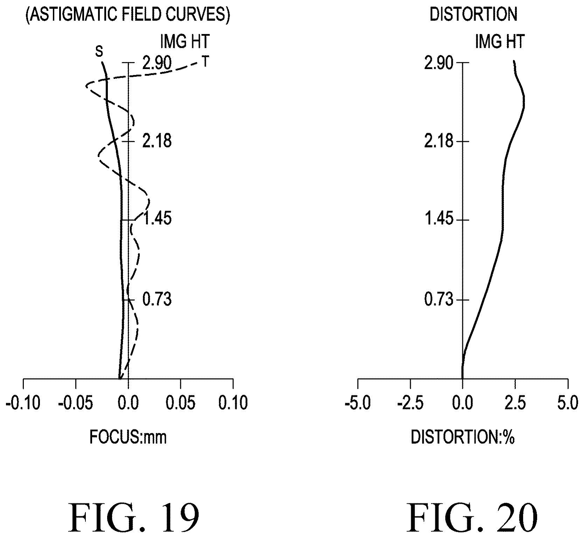

FIG. 17 is a diagram illustrating the lens assembly 700 according to an embodiment of the disclosure. FIG. 18 is a graph illustrating spherical aberration of the lens assembly 700 of FIG. 17 according to an embodiment of the disclosure. FIG. 19 is a graph illustrating astigmatism of the lens assembly 700 of FIG. 17 according to an embodiment of the disclosure. FIG. 20 is a graph illustrating distortion of the lens assembly 700 of FIG. 17 according to an embodiment of the disclosure.

The lens assembly 700 of FIG. 17 may have a focal length of approximately 2.99mm and an F-number of approximately 2.27. In an embodiment, the lens assembly 700 may satisfy at least some of the condition(s) presented regarding the shapes and refractive powers of the above-described lens(es) L1, L2, L3, L4, and L5 (e.g., lens surfaces), a total lens length, a maximum image height, a half field of view, the thickness of the first lens L1, and/or the distance between the aperture stop STO and the second lens L2. In an embodiment, the lens assembly 700 may be manufactured to the specifications illustrated in the following [Table 10] and have the aspheric coefficients of [Table 11] and [Table 12].

[Table 10]

| Lens surface (Surf) | Radius of curvature (Radius) | Thickness (Thick) | Focal length (EFL) | Refractive index (nd) | Abbe number (vd) |
|---|---|---|---|---|---|
| obj(S) | infinity | infinity | | | |
| sto | infinity | 0.000 | | | |
| S2 | 1.762 | 0.646 | 2.720 | 1.544 | 56.09 |
| S3 | -8.272 | 0.102 | | | |
| S4 | -4.348 | 0.202 | -7.757 | 1.671 | 19.23 |
| S5 | -25.402 | 0.252 | | | |
| S6 | -22.636 | 0.309 | 34.131 | 1.544 | 56.09 |
| S7 | -10.275 | 0.339 | | | |
| S8 | 1210.036 | 0.382 | -6.515 | 1.635 | 23.89 |
| S9 | 4.162 | 0.085 | | | |
| S10 | 0.803 | 0.568 | 5.692 | 1.535 | 55.71 |
| S11 | 0.819 | 0.600 | | | |
| S12 | infinity | 0.110 | | 1.517 | 64.2 |
| S13 | infinity | 0.270 | | | |
| img(IS) | infinity | 0.010 | | | |

[Table 11]

| Lens surface (Surf) | S2_ASP | S3_ASP | S4_ASP | S5_ASP | S6_ASP |
|---|---|---|---|---|---|
| k(Conic) | -1.7538E+00 | 0.0000E+00 | 3.3538E+01 | 9.6000E+01 | 6.1187E+01 |
| A(4th)/C4 | -1.2826E-02 | -1.9984E-01 | -5.8919E-02 | 7.3717E-03 | -8.2374E-02 |
| B(6th)/C5 | -8.7342E-03 | -1.5590E-01 | 2.3805E-01 | -1.8326E-02 | 6.2135E-01 |
| C(8th)/C6 | -1.5651E-01 | 1.5168E-01 | -1.2533E+00 | 9.2313E-01 | -2.9573E+01 |
| D(10th)/C7 | 0.0000E+00 | 3.6782E-04 | 4.3692E+00 | -7.9085E+00 | 3.4590E+02 |
| E(12th)/C8 | 0.0000E+00 | 1.1470E-01 | -7.4438E+00 | 2.9101E+01 | -2.2697E+03 |
| F(14th)/C9 | 0.0000E+00 | 0.0000E+00 | 6.6100E+00 | -6.2771E+01 | 9.4711E+03 |
| G(16th)/C10 | 0.0000E+00 | 0.0000E+00 | 0.0000E+00 | 7.3533E+01 | -2.6045E+04 |

(continued)

| Lens surface (Surf) | S2_ASP | S3_ASP | S4_ASP | S5_ASP | S6_ASP |
|---|---|---|---|---|---|
| H(18th)/C11 | 0.0000E+00 | 0.0000E+00 | 0.0000E+00 | -3.5753E+01 | 4.7026E+04 |
| J(20th)/C12 | 0.0000E+00 | 0.0000E+00 | 0.0000E+00 | 0.0000E+00 | -5.3645E+04 |
| K(22th)/C13 | 0.0000E+00 | 0.0000E+00 | 0.0000E+00 | 0.0000E+00 | 3.5053E+04 |
| L(24th)/C 14 | 0.0000E+00 | 0.0000E+00 | 0.0000E+00 | 0.0000E+00 | -9.9946E+03 |
| M(26th)/C15 | 0.0000E+00 | 0.0000E+00 | 0.0000E+00 | 0.0000E+00 | 0.0000E+00 |
| N(28th)/C16 | 0.0000E+00 | 0.0000E+00 | 0.0000E+00 | 0.0000E+00 | 0.0000E+00 |
| O(30th)/C17 | 0.0000E+00 | 0.0000E+00 | 0.0000E+00 | 0.0000E+00 | 0.0000E+00 |

[Table 12]

| Lens surface (Surf) | S7_ASP | S8_ASP | S9_ASP | S10_ASP | S11_ASP |
|---|---|---|---|---|---|
| k(Conic) | 8.2901E+01 | -7.4457E+01 | 4.8969E+00 | -2.4119E+00 | -1.0998E+00 |
| A(4th)/C4 | 3.0356E-01 | 1.0443E+00 | 1.0181E-01 | -8.0414E-01 | -7.0727E-01 |
| B(6th)/C5 | -3.1373E+00 | -4.5801E+00 | -4.5890E-01 | 1.3835E+00 | 6.1123E-01 |
| C(8th)/C6 | 1.2345E+01 | 1.7432E+01 | 3.5268E+00 | -2.5390E+00 | -1.9717E-01 |
| D(10th)/C7 | -3.1266E+01 | -5.5171E+01 | -1.4316E+01 | 4.7574E+00 | -4.0368E-01 |
| E(12th)/C8 | 3.8063E+01 | 1.2990E+02 | 3.2931E+01 | -7.6040E+00 | 7.6181E-01 |
| F(14th)/C9 | 4.2822E+01 | -2.2201E+02 | -4.9768E+01 | 8.6538E+00 | -7.0215E-01 |
| G(16th)/C10 | -2.6893E+02 | 2.7386E+02 | 5.2845E+01 | -6.7117E+00 | 4.2364E-01 |
| H(18th)/C11 | 5.0925E+02 | -2.4201E+02 | -4.0537E+01 | 3.5808E+00 | -1.7921E-01 |
| J(20th)/C12 | -5.1245E+02 | 1.5072E+02 | 2.2604E+01 | -1.3298E+00 | 5.4174E-02 |
| K(22th)/C13 | 2.7500E+02 | -6.4162E+01 | -9.0733E+00 | 3.4374E-01 | -1.1659E-02 |
| L(24th)/C 14 | -6.2082E+01 | 1.7645E+01 | 2.5515E+00 | -6.0717E-02 | 1.7446E-03 |
| M(26th)/C15 | 0.0000E+00 | -2.8006E+00 | -4.7642E-01 | 6.9932E-03 | -1.7244E-04 |
| N(28th)/C16 | 0.0000E+00 | 1.9251E-01 | 5.2990E-02 | -4.7342E-04 | 1.0115E-05 |
| O(30th)/C17 | 0.0000E+00 | 0.0000E+00 | -2.6541E-03 | 1.4286E-05 | -2.6645E-07 |

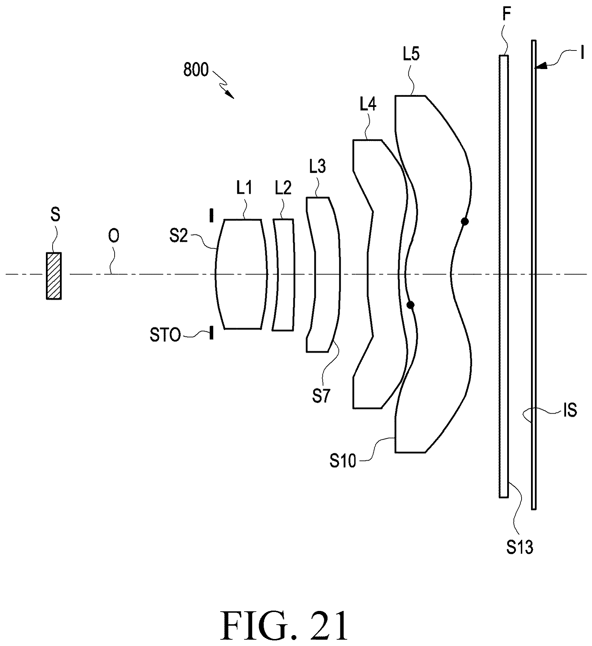

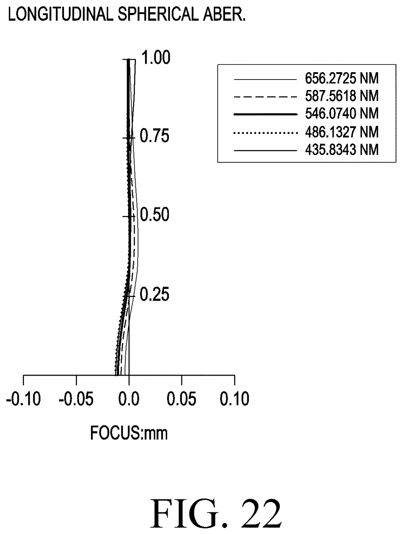

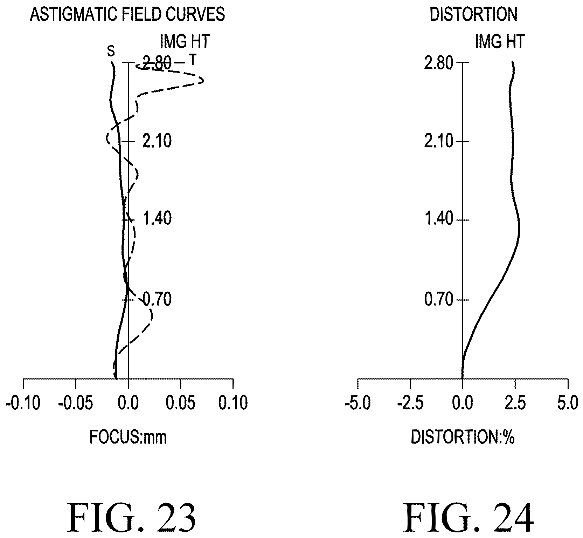

FIG. 21 is a diagram illustrating the lens assembly 800 according to an embodiment of the disclosure. FIG. 22 is a graph illustrating spherical aberration of the lens assembly 800 of FIG. 21 according to an embodiment of the disclosure. FIG. 23 is a graph illustrating astigmatism of the lens assembly 800 of FIG. 21 according to an embodiment of the disclosure. FIG. 24 is a graph illustrating distortion of the lens assembly 800 of FIG. 21 according to an embodiment of the disclosure.

The lens assembly 800 of FIG. 21 may have a focal length of approximately 2.95mm and an F-number of approximately 2.46. In an embodiment, the lens assembly 800 may satisfy at least some of the condition(s) presented regarding the shapes and refractive powers of the above-described lens(es) L1, L2, L3, L4, and L5 (e.g., lens surfaces), a total lens length, a maximum image height, a half field of view, the thickness of the first lens L1, and/or the distance between the aperture stop STO and the second lens L2. In an embodiment, the lens assembly 800 may be manufactured to the specifications illustrated in the following [Table 13] and have the aspheric coefficients of [Table 14] and [Table 15].

[Table 13]

| Lens surface (Surf) | Radius of curvature (Radius) | Thickness (Thick) | Focal length (EFL) | Refractive index (nd) | Abbe number (vd) |
|---|---|---|---|---|---|
| obj(S) | infinity | infinity | | | |
| sto | infinity | -0.010 | | | |

(continued)

| Lens surface (Surf) | Radius of curvature (Radius) | Thickness (Thick) | Focal length (EFL) | Refractive index (nd) | Abbe number (vd) |
|---|---|---|---|---|---|
| S2 | 1.791 | 0.650 | 2.748 | 1.544 | 56.09 |
| S3 | -8.112 | 0.134 | | | |
| S4 | -4.297 | 0.200 | -7.597 | 1.671 | 19.23 |
| S5 | -26.235 | 0.244 | | | |
| S6 | -21.825 | 0.326 | 26.770 | 1.544 | 56.09 |
| S7 | -8.805 | 0.328 | | | |
| S8 | -118.380 | 0.384 | -6.541 | 1.614 | 25.92 |
| S9 | 4.205 | 0.070 | | | |
| S10 | 0.746 | 0.514 | 5.421 | 1.535 | 55.71 |
| S11 | 0.761 | 0.600 | | | |
| S12 | infinity | 0.110 | | 1.517 | 64.2 |
| S13 | infinity | 0.280 | | | |
| img(IS) | infinity | 0.01 | | | |

[Table 14]

| Lens surface (Surf) | S2_ASP | S3_ASP | S4_ASP | S5_ASP | S6_ASP |
|---|---|---|---|---|---|
| k(Conic) | -1.8201E+00 | 0.0000E+00 | 3.2845E+01 | -8.1061E+00 | 6.1187E+01 |
| A(4th)/C4 | -1.1924E-02 | -1.8878E-01 | -4.4459E-02 | 3.0796E-02 | -1.1874E-01 |
| B(6th)/C5 | -2.5939E-02 | -1.8908E-01 | -8.5568E-02 | -4.4806E-01 | 3.5390E-01 |
| C(8th)/C6 | -1.2758E-01 | 2.4554E-01 | -1.4661E-02 | 3.5878E+00 | -1.0510E+01 |
| D(10th)/C7 | 0.0000E+00 | 4.5301E-02 | 2.0194E+00 | -2.0196E+01 | 9.1598E+01 |
| E(12th)/C8 | 0.0000E+00 | -1.3345E-01 | -4.4971E+00 | 6.8153E+01 | -4.6980E+02 |
| F(14th)/C9 | 0.0000E+00 | 0.0000E+00 | 4.7242E+00 | -1.3758E+02 | 1.5713E+03 |
| G(16th)/C10 | 0.0000E+00 | 0.0000E+00 | 0.0000E+00 | 1.5140E+02 | -3.5186E+03 |
| H(18th)/C11 | 0.0000E+00 | 0.0000E+00 | 0.0000E+00 | -6.9309E+01 | 5.1905E+03 |
| J(20th)/C12 | 0.0000E+00 | 0.0000E+00 | 0.0000E+00 | 0.0000E+00 | -4.7928E+03 |
| K(22th)/C13 | 0.0000E+00 | 0.0000E+00 | 0.0000E+00 | 0.0000E+00 | 2.4762E+03 |
| L(24th)/C 14 | 0.0000E+00 | 0.0000E+00 | 0.0000E+00 | 0.0000E+00 | -5.3222E+02 |
| M(26th)/C15 | 0.0000E+00 | 0.0000E+00 | 0.0000E+00 | 0.0000E+00 | 0.0000E+00 |
| N(28th)/C16 | 0.0000E+00 | 0.0000E+00 | 0.0000E+00 | 0.0000E+00 | 0.0000E+00 |
| O(30th)/C17 | 0.0000E+00 | 0.0000E+00 | 0.0000E+00 | 0.0000E+00 | 0.0000E+00 |

[Table 15]

| Lens surface (Surf) | S7_ASP | S8_ASP | S9_ASP | S10_ASP | S11_ASP |
|---|---|---|---|---|---|
| k(Conic) | 7.2665E+01 | 8.4290E+01 | 4.8893E+00 | -2.7694E+00 | -1.1866E+00 |
| A(4th)/C4 | 2.2051E-01 | 1.2094E+00 | 2.7946E-01 | -5.8065E-01 | -7.1568E-01 |
| B(6th)/C5 | -1.9455E+00 | -5.9488E+00 | -2.2604E+00 | -3.9579E-02 | 4.2954E-01 |
| C(8th)/C6 | 1.0799E+00 | 2.3734E+01 | 1.1270E+01 | 2.0707E+00 | 5.2799E-01 |
| D(10th)/C7 | 3.5458E+01 | -7.5144E+01 | -3.4380E+01 | -4.6019E+00 | -1.8749E+00 |

(continued)

| Lens surface (Surf) | S7_ASP | S8_ASP | S9_ASP | S10_ASP | S11_ASP |
|---|---|---|---|---|---|
| E(12th)/C8 | -2.1749E+02 | 1.7656E+02 | 6.7639E+01 | 4.8657E+00 | 2.6678E+00 |
| F(14th)/C9 | 6.8871E+02 | -3.0484E+02 | -9.1798E+01 | -2.6526E+00 | -2.3965E+00 |
| G(16th)/C10 | -1.3538E+03 | 3.8618E+02 | 8.9350E+01 | 4.7608E-01 | 1.4896E+00 |
| H(18th)/C11 | 1.7040E+03 | -3.5680E+02 | -6.3522E+01 | 3.1613E-01 | -6.5965E-01 |
| J(20th)/C12 | -1.3382E+03 | 2.3663E+02 | 3.3084E+01 | -2.6361E-01 | 2.0939E-01 |
| K(22th)/C13 | 5.9836E+02 | -1.0927E+02 | -1.2485E+01 | 9.5146E-02 | -4.7225E-02 |
| L(24th)/C 14 | -1.1644E+02 | 3.3223E+01 | 3.3196E+00 | -2.0340E-02 | 7.3772E-03 |
| M(26th)/C15 | 0.0000E+00 | -5.9503E+00 | -5.8897E-01 | 2.6557E-03 | -7.5805E-04 |
| N(28th)/C16 | 0.0000E+00 | 4.7308E-01 | 6.2495E-02 | -1.9679E-04 | 4.6047E-05 |
| O(30th)/C17 | 0.0000E+00 | 0.0000E+00 | -2.9955E-03 | 6.3721E-06 | -1.2520E-06 |

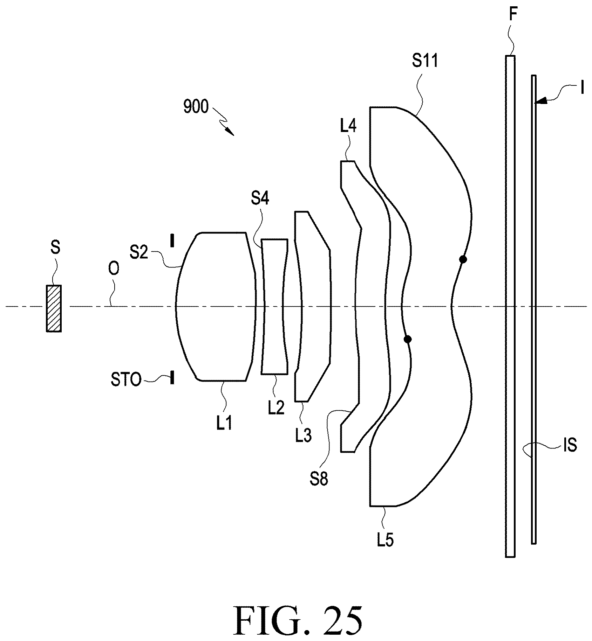

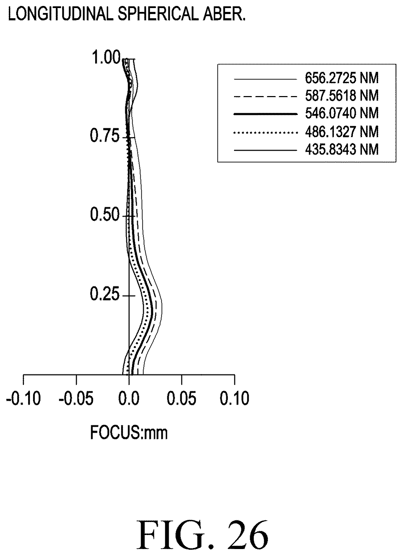

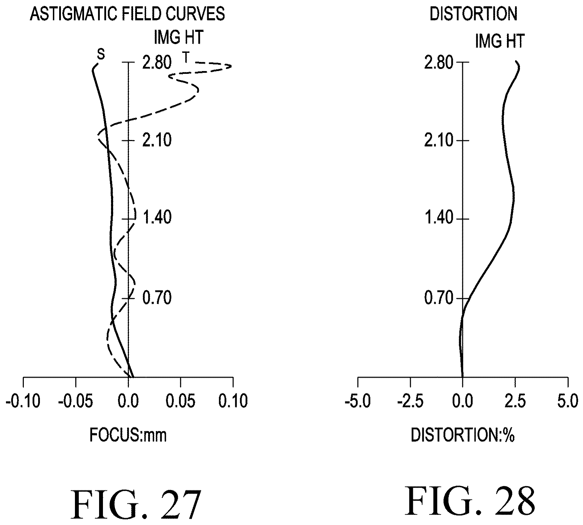

FIG. 25 is a diagram illustrating the lens assembly 900 according to an embodiment of the disclosure. FIG. 26 is a graph illustrating spherical aberration of the lens assembly 900 of FIG. 25 according to an embodiment of the disclosure. FIG. 27 is a graph illustrating astigmatism of the lens assembly 900 of FIG. 25 according to an embodiment of the disclosure. FIG. 28 is a graph illustrating distortion of the lens assembly 900 of FIG. 25 according to an embodiment of the disclosure.

The lens assembly 900 of FIG. 25 may have a focal length of approximately 3.30mm and an F-number of approximately 2.23. In an embodiment, the lens assembly 900 may satisfy at least some of the condition(s) presented regarding the shapes and refractive powers of the above-described lens(es) L1, L2, L3, L4, and L5 (e.g., lens surfaces), a total lens length, a maximum image height, a half field of view, the thickness of the first lens L1, and/or the distance between the aperture stop STO and the second lens L2. In an embodiment, the lens assembly 900 may be manufactured to the specifications illustrated in the following [Table 16] and have the aspheric coefficients of [Table 17] and [Table 18].

[Table 16]

| Lens surface (Surf) | Radius of curvature (Radius) | Thickness (Thick) | Focal length (EFL) | Refractive index (nd) | Abbe number (vd) |
|---|---|---|---|---|---|
| obj(S) | infinity | infinity | | | |
| sto | infinity | 0.100 | | | |
| S2 | 1.559 | 0.900 | 2.725 | 1.544 | 56.09 |
| S3 | -26.390 | 0.100 | | | |
| S4 | -8.089 | 0.200 | -7.260 | 1.661 | 20.37 |
| S5 | 12.237 | 0.212 | | | |
| S6 | 250.253 | 0.327 | 34.426 | 1.544 | 56.09 |
| S7 | -20.334 | 0.272 | | | |
| S8 | -196.864 | 0.340 | -8.506 | 1.635 | 23.89 |
| S9 | 5.613 | 0.190 | | | |
| S10 | 0.963 | 0.559 | 17.509 | 1.535 | 55.71 |
| S11 | 0.856 | 0.600 | | | |
| S12 | infinity | 0.110 | | 1.517 | 64.20 |
| S13 | infinity | 0.193 | | | |
| img(IS) | infinity | -0.003 | | | |

[Table 17]

| Lens surface (Surf) | S2_ASP | S3_ASP | S4_ASP | S5_ASP | S6_ASP |
|---|---|---|---|---|---|
| k(Conic) | -8.1494E-01 | 0.0000E+00 | 3.6565E+01 | 9.0000E+01 | 6.1187E+01 |
| A(4th)/C4 | -9.0849E-02 | -1.9734E-01 | -5.9352E-02 | 1.0257E-01 | 6.8994E-02 |
| B(6th)/C5 | 2.0140E+00 | -3.8455E-01 | -3.9608E-01 | -4.1804E-01 | -6.8769E-01 |
| C(8th)/C6 | -2.4348E+01 | 2.4219E+00 | 4.2519E+00 | 3.8660E+00 | -1.2407E+01 |
| D(10th)/C7 | 1.7469E+02 | -9.5540E+00 | -1.9016E+01 | -1.4430E+01 | 1.8165E+02 |
| E(12th)/C8 | -7.9899E+02 | 2.3784E+01 | 5.0809E+01 | 2.9141E+01 | -1.2613E+03 |
| F(14th)/C9 | 2.3836E+03 | -3.0458E+01 | -7.7095E+01 | -3.0174E+01 | 5.4541E+03 |
| G(16th)/C10 | -4.6211E+03 | 1.0964E+01 | 6.0708E+01 | 1.1980E+01 | -1.5515E+04 |
| H(18th)/C11 | 5.6100E+03 | 1.2333E+01 | -1.8825E+01 | 8.2516E-01 | 2.9022E+04 |
| J(20th)/C12 | -3.8718E+03 | -9.2134E+00 | 0.0000E+00 | 0.0000E+00 | -3.4358E+04 |
| K(22th)/C13 | 1.1587E+03 | 0.0000E+00 | 0.0000E+00 | 0.0000E+00 | 2.3337E+04 |
| L(24th)/C 14 | 0.0000E+00 | 0.0000E+00 | 0.0000E+00 | 0.0000E+00 | -6.9286E+03 |
| M(26th)/C15 | 0.0000E+00 | 0.0000E+00 | 0.0000E+00 | 0.0000E+00 | 0.0000E+00 |
| N(28th)/C16 | 0.0000E+00 | 0.0000E+00 | 0.0000E+00 | 0.0000E+00 | 0.0000E+00 |
| O(30th)/C17 | 0.0000E+00 | 0.0000E+00 | 0.0000E+00 | 0.0000E+00 | 0.0000E+00 |

[Table 18]

| Lens surface (Surf) | S7_ASP | S8_ASP | S9_ASP | S10_ASP | S11_ASP |
|---|---|---|---|---|---|
| k(Conic) | 7.7946E+01 | -9.0000E+01 | 5.9630E+00 | -2.9843E+00 | -1.1097E+00 |
| A(4th)/C4 | 4.2774E-01 | 9.0580E-01 | -1.1988E-01 | -8.7700E-01 | -8.4443E-01 |
| B(6th)/C5 | -2.1172E+00 | -3.8085E+00 | 6.5130E-01 | 1.5358E+00 | 1.1728E+00 |
| C(8th)/C6 | 2.2299E+00 | 1.5090E+01 | 4.9380E-01 | -2.0913E+00 | -1.3253E+00 |
| D(10th)/C7 | 1.0204E+01 | -5.0056E+01 | -9.9825E+00 | 2.1325E+00 | 1.1063E+00 |
| E(12th)/C8 | -5.2367E+01 | 1.1966E+02 | 3.1051E+01 | -2.2809E+00 | -7.0438E-01 |
| F(14th)/C9 | 1.2198E+02 | -2.0210E+02 | -5.4033E+01 | 2.4274E+00 | 3.5995E-01 |
| G(16th)/C10 | -1.7455E+02 | 2.4298E+02 | 6.2233E+01 | -1.9440E+00 | -1.5151E-01 |
| H(18th)/C11 | 1.6032E+02 | -2.0860E+02 | -5.0149E+01 | 1.0596E+00 | 5.1412E-02 |
| J(20th)/C12 | -9.2006E+01 | 1.2682E+02 | 2.8775E+01 | -3.8690E-01 | -1.3303E-02 |
| K(22th)/C13 | 3.0051E+01 | -5.3264E+01 | -1.1711E+01 | 9.3389E-02 | 2.4561E-03 |
| L(24th)/C 14 | -4.2778E+00 | 1.4684E+01 | 3.3024E+00 | -1.4318E-02 | -2.9960E-04 |
| M(26th)/C15 | 0.0000E+00 | -2.3885E+00 | -6.1312E-01 | 1.2643E-03 | 2.1428E-05 |
| N(28th)/C16 | 0.0000E+00 | 1.7357E-01 | 6.7349E-02 | -4.8985E-05 | -6.7690E-07 |
| O(30th)/C17 | 0.0000E+00 | 0.0000E+00 | -3.3132E-03 | 0.0000E+00 | 0.0000E+00 |

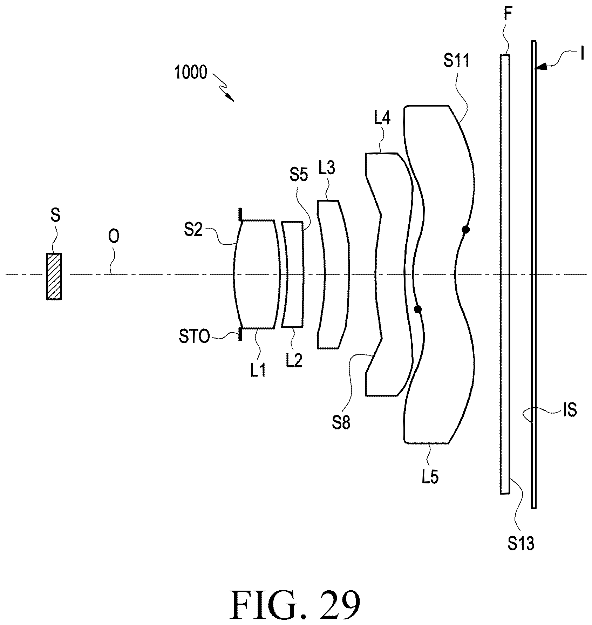

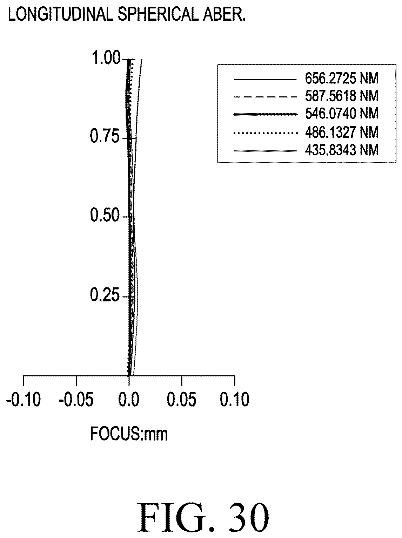

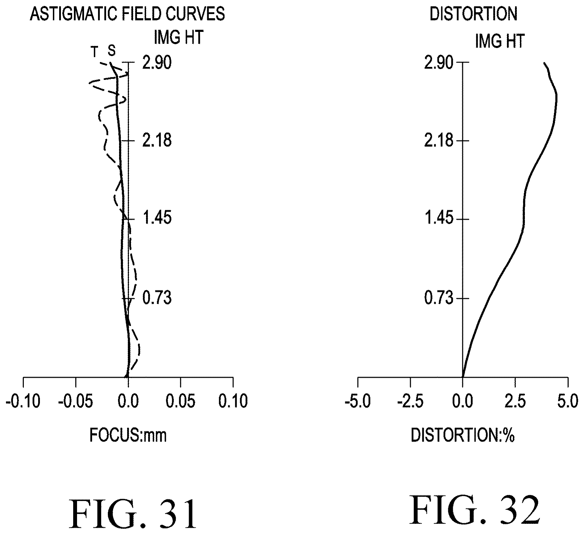

FIG. 29 is a diagram illustrating the lens assembly 1000 according to an embodiment of the disclosure. FIG. 30 is a graph illustrating spherical aberration of the lens assembly 1000 of FIG. 29 according to an embodiment of the disclosure. FIG. 31 is a graph illustrating astigmatism of the lens assembly 1000 of FIG. 29 according to an embodiment of the disclosure. FIG. 32 is a graph illustrating distortion of the lens assembly 1000 of FIG. 29 according to an embodiment of the disclosure.

The lens assembly 1000 of FIG. 29 may have a focal length of approximately 3.00mm and an F-number of approximately 2.273. In an embodiment, the lens assembly 1000 may satisfy at least some of the condition(s) presented regarding the shapes and refractive powers of the above-described lens(es) L1, L2, L3, L4, and L5 (e.g., lens surfaces), a total lens length, a maximum image height, a half field of view, the thickness of the first lens L1, and/or the distance between the aperture stop STO and the second lens L2. In an embodiment, the lens assembly 1000 may be manufactured to the specifications illustrated in the following [Table 19] and have the aspheric coefficients of [Table 20] and [Table 21].

[Table 19]

| Lens surface (Surf) | Radius of curvature (Radius) | Thickness (Thick) | Focal length (EFL) | Refractive index (nd) | Abbe number (vd) |
|---|---|---|---|---|---|
| obj(S) | infinity | infinity | | | |
| sto | infinity | -0.10000 | | | |
| S2 | 1.75821 | 0.60000 | 2.718 | 1.54410 | 56.09 |
| S3 | -8.41652 | 0.10000 | | | |
| S4 | -4.39020 | 0.20813 | -7.751 | 1.67074 | 19.23 |
| S5 | -27.01236 | 0.28044 | | | |
| S6 | -22.33747 | 0.31000 | 33.544 | 1.54410 | 56.09 |
| S7 | -10.11808 | 0.35524 | | | |
| S8 | 814.78839 | 0.37005 | -6.513 | 1.63492 | 23.89 |
| S9 | 4.15338 | 0.10000 | | | |
| S10 | 0.79544 | 0.55734 | 5.641 | 1.53480 | 55.71 |
| S11 | 0.81455 | 0.60000 | | | |
| S12 | infinity | 0.11000 | | 1.51680 | 64.2 |
| S13 | infinity | 0.27440 | | | |
| img(IS) | infinity | 0.00411 | | | |

[Table 20]

| Lens surface (Surf) | S2_ASP | S3 ASP | S4_ASP | S5 ASP | S6 ASP |
|---|---|---|---|---|---|
| k(Conic) | -1.9308E+00 | 0.0000E+00 | 3.3623E+01 | 2.2867E+02 | 6.1187E+01 |
| A(4th)/C4 | -1.2721E-02 | -2.1699E-01 | -6.0726E-02 | 3.4664E-02 | 2.5991E-02 |
| B(6th)/C5 | -4.9164E-03 | 8.1350E-02 | 2.7845E-01 | -6.2525E-01 | -1.8243E+00 |
| C(8th)/C6 | -1.9407E-01 | -8.2426E-01 | -9.3513E-01 | 6.4494E+00 | 2.4460E+00 |
| D(10th)/C7 | 0.0000E+00 | 1.5950E+00 | 1.7422E+00 | -3.6362E+01 | 6.4544E+01 |
| E(12th)/C8 | 0.0000E+00 | -8.8992E-01 | -1.4102E+00 | 1.1917E+02 | -6.0800E+02 |
| F(14th)/C9 | 0.0000E+00 | 0.0000E+00 | 1.6889E+00 | -2.3867E+02 | 2.8553E+03 |
| G(16th)/C10 | 0.0000E+00 | 0.0000E+00 | 0.0000E+00 | 2.7014E+02 | -8.3311E+03 |
| H(18th)/C11 | 0.0000E+00 | 0.0000E+00 | 0.0000E+00 | -1.3259E+02 | 1.5672E+04 |
| J(20th)/C12 | 0.0000E+00 | 0.0000E+00 | 0.0000E+00 | 0.0000E+00 | -1.8534E+04 |
| K(22th)/C13 | 0.0000E+00 | 0.0000E+00 | 0.0000E+00 | 0.0000E+00 | 1.2552E+04 |
| L(24th)/C 14 | 0.0000E+00 | 0.0000E+00 | 0.0000E+00 | 0.0000E+00 | -3.7133E+03 |
| M(26th)/C15 | 0.0000E+00 | 0.0000E+00 | 0.0000E+00 | 0.0000E+00 | 0.0000E+00 |
| N(28th)/C16 | 0.0000E+00 | 0.0000E+00 | 0.0000E+00 | 0.0000E+00 | 0.0000E+00 |
| O(30th)/C17 | 0.0000E+00 | 0.0000E+00 | 0.0000E+00 | 0.0000E+00 | 0.0000E+00 |

[Table 21]

| Lens surface (Surf) | S7 ASP | S8 ASP | S9 ASP | S10_ASP | S11_ASP |
|---|---|---|---|---|---|
| k(Conic) | 8.6679E+01 | -1.2785E+27 | 4.8995E+00 | -2.3542E+00 | -1.0832E+00 |
| A(4th)/C4 | 2.8203E-01 | 1.0154E+00 | 1.0765E-01 | -8.3738E-01 | -7.2668E-01 |
| B(6th)/C5 | -2.7027E+00 | -4.1480E+00 | -4.1390E-01 | 1.7607E+00 | 7.8329E-01 |
| C(8th)/C6 | 8.2559E+00 | 1.3973E+01 | 2.6944E+00 | -4.2107E+00 | -7.6072E-01 |
| D(10th)/C7 | -1.0121E+01 | -3.9234E+01 | -1.0332E+01 | 8.8437E+00 | 6.2504E-01 |
| E(12th)/C8 | -2.7927E+01 | 8.4874E+01 | 2.2648E+01 | -1.3904E+01 | -4.2847E-01 |
| F(14th)/C9 | 1.7125E+02 | -1.4047E+02 | -3.2800E+01 | 1.5218E+01 | 2.2838E-01 |
| G(16th)/C10 | -4.2239E+02 | 1.7835E+02 | 3.3691E+01 | -1.1513E+01 | -8.7195E-02 |
| H(18th)/C11 | 6.1171E+02 | -1.7231E+02 | -2.5312E+01 | 6.0964E+00 | 2.2188E-02 |
| J(20th)/C12 | -5.3707E+02 | 1.2369E+02 | 1.4008E+01 | -2.2793E+00 | -3.3304E-03 |
| K(22th)/C13 | 2.6533E+02 | -6.3372E+01 | -5.6472E+00 | 5.9989E-01 | 1.6104E-04 |
| L(24th)/C 14 | -5.6695E+01 | 2.1723E+01 | 1.6100E+00 | -1.0891E-01 | 3.7302E-05 |
| M(26th)/C15 | 0.0000E+00 | -4.4331E+00 | -3.0673E-01 | 1.3001E-02 | -7.8963E-06 |
| N(28th)/C16 | 0.0000E+00 | 4.0497E-01 | 3.4939E-02 | -9.1943E-04 | 6.1737E-07 |
| O(30th)/C17 | 0.0000E+00 | 0.0000E+00 | -1.7950E-03 | 2.9211E-05 | -1.8299E-08 |

According to an embodiment, values calculated from the lens data of the lens assemblies 400, 500, 600, 700, 800, 900, and 1000 illustrated in FIGS. 5, 9, 13, 17, 21, 25, and/or 29 with respect to the conditions presented by [Equation 1] to [Equation 4] are illustrated in [Table 22] below.

[Table 22]

| classification | Embodiment of FIG. 5 | Embodiment of FIG. 9 | Embodiment of FIG. 13 | Embodiment of FIG. 17 | Embodiment of FIG. 21 | Embodiment of FIG. 25 | Embodiment of FIG. 29 |
|---|---|---|---|---|---|---|---|
| Equation 1 | 1.7 | 1.76 | 1.56 | 1.42 | 1.49 | 1.72 | 1.49 |
| Equation 2 | 0.21 | 0.2 | 0.21 | 0.19 | 0.2 | 0.28 | 0.16 |
| Equation 3 | 0.50 | 0.48 | 0.50 | 0.44 | 0.46 | 0.63 | 0.42 |
| Equation 4 | 0.18 | 0.18 | 0.18 | 0.17 | 0.17 | 0.23 | 0.16 |

As described above, a lens assembly (e.g., the lens assemblies 210, 400, 500, 600, 700, 800, 900, and 1000 of FIGS. 2, 5, 9, 13, 17, 21, 25, and/or 29) according to embodiments of the disclosure may be miniaturized in terms of the outer diameter of a first lens (e.g., the first lens L1 of FIGS. 5, 9, 13, 17, 21, 25, and/or 29) and/or a barrel structure by satisfying the conditions presented regarding a total lens length, a maximum image height, and/or a half field of view. When the conditions regarding the thickness of the first lens or the distance between a stop aperture (e.g., the aperture stop STO of FIGS. 5, 9, 13, 17, 21, 25, and/or 29) and a second lens (e.g., the second lens L2 of FIGS. 5, 9, 13, 17, 21, 25, and/or 29) are satisfied, the miniaturization of the lens assembly may be further facilitated. For example, the lens assembly may be arranged or disposed in harmony with the appearance of an electronic device, while implementing any one of a plurality of cameras arranged adjacent to each other (e.g., the cameras 180, 280, 312, and 313 of FIG. 1 and/or FIG. 4). In an embodiment, the miniaturized lens assembly may suppress the reduction of the active area of a display, while being disposed to overlap with the display and/or while being disposed parallel to one side of the display.

The effects obtainable from the disclosure are not limited to the effects mentioned above, and other unmentioned effects will be clearly understood by those skilled in the art from the above description of the embodiment(s).

As described above, a lens assembly (e.g., the lens assembly 210, 400, 500, 600, 700, 800, 900, or 1000 in FIG. 2, FIG. 5, FIG. 9, FIG. 13, FIG. 17, FIG. 21, FIG. 25, and/or FIG. 29) includes an image sensor (e.g., the image sensor 230 or I in FIG. 2, FIG. 5, FIG. 9, FIG. 13, FIG. 17, FIG. 21, FIG. 25, and/or FIG. 29), an aperture stop (e.g., the aperture stop STO in FIG. 2, FIG. 5, FIG. 9, FIG. 13, FIG. 17, FIG. 21, FIG. 25, and/or FIG. 29) aligned with the image sensor on an optical axis (e.g., the optical axis O in FIG. 2, FIG. 5, FIG. 9, FIG. 13, FIG. 17, FIG. 21, FIG. 25, and/or FIG. 29), a first lens (e.g., the first lens L1 in FIG. 2, FIG. 5, FIG. 9, FIG. 13, FIG. 17, FIG. 21, FIG. 25, and/or FIG. 29) having a positive refractive power, including a convex object-side surface, and disposed between the aperture stop and the image sensor, a second lens (e.g., the second lens L2 in FIG. 2, FIG. 5, FIG. 9, FIG. 13, FIG. 17, FIG. 21, FIG. 25, and/or FIG. 29) having a negative refractive power and disposed between the first lens and the image sensor, a third lens (e.g., the third lens L3 in FIG. 2, FIG. 5, FIG. 9, FIG. 13, FIG. 17, FIG. 21, FIG. 25, and/or FIG. 29) disposed between the second lens and the image sensor, a fourth lens (e.g., the fourth lens L4 in FIG. 2, FIG. 5, FIG. 9, FIG. 13, FIG. 17, FIG. 21, FIG. 25, and/or FIG. 29) disposed between the third lens and the image sensor, and a fifth lens (e.g., the fifth lens L5 in FIG. 2, FIG. 5, FIG. 9, FIG. 13, FIG. 17, FIG. 21, FIG. 25, and/or FIG. 29) having a positive refractive power, including a concave image sensor-side surface, and disposed between the fourth lens and the image sensor. In an embodiment, the lens assembly satisfies the following [Conditional Expression 1].

[Conditional Expression 1]

$$0.8 < TTL/(IH*\tan(HFOV)) < 2$$

Herein, 'TTL' may be a distance from the object-side surface of the first lens to an imaging plane (e.g., the imaging plane IS in FIG. 2, FIG. 5, FIG. 9, FIG. 13, FIG. 17, FIG. 21, FIG. 25, and/or FIG. 29) of the image sensor, measured along the optical axis, 'IH' may be a maximum image height of the lens assembly, and 'HFOV' may be a half field of view of the lens assembly.

According to an embodiment, a center thickness of the first lens may be greater than a center thickness of each of the second lens, the third lens, the fourth lens, and the fifth lens.

According to an embodiment, the lens assembly may satisfy the following [Conditional Expression 2].

[Conditional Expression 2]

$$0.15 < T1/TTL < 0.25$$

Herein, 'T1' may be the center thickness of the first lens.

According to an embodiment, the lens assembly may satisfy the following [Conditional Expression 3].

[Conditional Expression 3]

$$0.40 < T1/(T2+T3+T4+T5) < 0.65$$

Herein, 'T1' may be the center thickness of the first lens, 'T2' may be the center thickness of the second lens, 'T3' is the center thickness of the third lens, 'T4' may be the center thickness of the fourth lens, and 'T5' may be the center thickness of the fifth lens.

According to an embodiment, a distance from the aperture stop to an object-side surface of the second lens may be 0.55mm or more and 1.4mm or less.

According to an embodiment, the lens assembly may satisfy the following [Conditional Expression 4].

[Conditional Expression 4]

$$0.13 < D4/TTL < 0.37$$

Herein, 'D4' may be the distance from the aperture stop to the object-side surface of the second lens, measured along the optical axis.

According to an embodiment, the third lens may have a positive refractive power, and the fourth lens may have a negative refractive power.

According to an embodiment, the third lens may include a convex image sensor-side surface.

According to an embodiment, the fifth lens may include a convex object-side surface.

According to an embodiment, the fifth lens may include at least one inflection point (e.g., the inflection point IP in FIG. 5) disposed on at least one of the object-side surface and the image sensor-side surface thereof.

According to an embodiment of the disclosure, an electronic device (e.g., the electronic device 101, 102, 104, or 300 in FIG. 1, FIG. 3, and/or FIG. 4) includes a lens assembly (e.g., the lens assembly 210, 400, 500, 600, 700, 800, 900, or 1000 in FIG. 2, FIG. 5, FIG. 9, FIG. 13, FIG. 17, FIG. 21, FIG. 25, and/or FIG. 29) and a processor (e.g., the processor 120 in FIG. 1 and/or the image signal processor 260 in FIG. 2) configured to obtain an object image using the lens assembly. In an embodiment, the lens assembly includes an image sensor (e.g., the image sensor 230 or I in FIG. 2, FIG. 5, FIG. 9, FIG. 13, FIG. 17, FIG. 21, FIG. 25, and/or FIG. 29), an aperture stop (e.g., the aperture stop STO in FIG. 2, FIG. 5, FIG. 9, FIG. 13, FIG. 17, FIG. 21, FIG. 25, and/or FIG. 29) aligned with the image sensor on an optical axis (e.g., the optical axis O in FIG. 2, FIG. 5, FIG. 9, FIG. 13, FIG. 17, FIG. 21, FIG. 25, and/or FIG. 29), a first lens (e.g., the first lens L1 in FIG. 2, FIG. 5, FIG. 9, FIG. 13, FIG. 17, FIG. 21, FIG. 25, and/or FIG. 29) having a positive refractive power, including a convex object-side surface, and disposed between the aperture stop and the image sensor, a second lens (e.g., the second lens L2 in FIG. 2, FIG. 5, FIG. 9, FIG. 13, FIG. 17, FIG. 21, FIG. 25, and/or FIG. 29) having a negative refractive power and disposed between the first lens and the image sensor, a third lens (e.g., the third lens L3 in FIG. 2, FIG. 5, FIG. 9, FIG. 13, FIG. 17, FIG. 21, FIG. 25, and/or FIG. 29) disposed between the second lens and the image sensor, a fourth lens (e.g., the fourth lens L4 in FIG. 2, FIG. 5, FIG. 9, FIG. 13, FIG. 17, FIG. 21, FIG. 25, and/or FIG. 29) disposed between the third lens and the image sensor, and a fifth lens (e.g., the fifth lens L5 in FIG. 2, FIG. 5, FIG. 9, FIG. 13, FIG. 17, FIG. 21, FIG. 25, and/or FIG. 29) having a positive refractive power, including a concave image sensor-side surface, and disposed between the fourth lens and the image sensor. In an embodiment, the lens assembly satisfies the following [Conditional Expression 1].

[Conditional Expression 1]

$$0.8 < TTL/(IH*tan(HFOV)) < 2$$

Herein, 'TTL' may be a distance from the object-side surface of the first lens to an imaging plane (e.g., the imaging plane IS in FIG. 2, FIG. 5, FIG. 9, FIG. 13, FIG. 17, FIG. 21, FIG. 25, and/or FIG. 29) of the image sensor, measured along the optical axis, 'IH' may be a maximum image height of the lens assembly, and 'HFOV' may be a half field of view of the lens assembly.

According to an embodiment, a center thickness of the first lens may be greater than a center thickness of each of the second lens, the third lens, the fourth lens, and the fifth lens.

According to an embodiment, the lens assembly may satisfy the following [Conditional Expression 2].

[Conditional Expression 2]

$$0.15 < T1/TTL < 0.25$$

Herein, 'T1' may be the center thickness of the first lens.

According to an embodiment, the lens assembly may satisfy the following [Conditional Expression 3].

[Conditional Expression 3]

$$0.40 < T1/(T2+T3+T4+T5) < 0.65$$

Herein, 'T1' may be the center thickness of the first lens, 'T2' may be the center thickness of the second lens, 'T3' is the center thickness of the third lens, 'T4' may be the center thickness of the fourth lens, and 'T5' may be the center thickness of the fifth lens.

According to an embodiment, a distance from the aperture stop to an object-side surface of the second lens may be 0.55mm or more and 1.4mm or less.

According to an embodiment, the lens assembly may satisfy the following [Conditional Expression 4].

[Conditional Expression 4]

$$0.13 < D4/TTL < 0.37$$

Herein, 'D4' may be the distance from the aperture stop to the object-side surface of the second lens, measured along the optical axis.

According to an embodiment, the third lens may have a positive refractive power, and the fourth lens may have a negative refractive power.

According to an embodiment, the third lens may include a convex image sensor-side surface.

According to an embodiment, the fifth lens may include a convex object-side surface.

According to an embodiment, the fifth lens may include at least one inflection point (e.g., the inflection point IP in FIG. 5) disposed on at least one of the object-side surface and the image sensor-side surface thereof.

While the disclosure has been illustrated and described in relation to an embodiment, it should be understood that the embodiment is for illustrative purposes and not intended to limit the disclosure. It will be apparent to those skilled in the art that various changes may be made in the form and detailed configurations without departing from the scope of the disclosure, including the appended claims and their equivalents.

**Claims**

1. A lens assembly (210; 400; 500; 600; 700; 800; 900; 1000) comprising:

   an image sensor (230, I);
   an aperture stop (STO) aligned with the image sensor on an optical axis (O);
   a first lens (L1) having a positive refractive power, including a convex object-side surface, and disposed between the aperture stop and the image sensor;
   a second lens (L2) having a negative refractive power and disposed between the first lens and the image sensor;
   a third lens (L3) disposed between the second lens and the image sensor;
   a fourth lens (L4) disposed between the third lens and the image sensor; and
   a fifth lens (L5) having a positive refractive power, including a concave image sensor-side surface, and disposed between the fourth lens and the image sensor,
   wherein the lens assembly satisfies the following [Conditional Expression 1],

   [Conditional Expression 1]

   $$0.8 < TTL/(IH*\tan(HFOV)) < 2$$

   (where 'TTL' is a distance from the object-side surface of the first lens to an imaging plane (IS) of the image sensor, measured along the optical axis, 'IH' is a maximum image height of the lens assembly, and 'HFOV' is a half field of view of the lens assembly).

2. The lens assembly of claim 1, wherein a center thickness of the first lens is greater than a center thickness of each of the second lens, the third lens, the fourth lens, and the fifth lens.

3. The lens assembly of claim 1 or 2, wherein the lens assembly satisfies the following [Conditional Expression 2],

   [Conditional Expression 2]

   $$0.15 < T1/TTL < 0.25$$

   (where 'T1' is the center thickness of the first lens).

4. The lens assembly of any one of claims 1 to 3, wherein the lens assembly satisfies the following [Conditional Expression 3],

   [Conditional Expression 3]

   $$0.40 < T1/(T2+T3+T4+T5) < 0.65$$

   (where 'T1' is the center thickness of the first lens, 'T2' is the center thickness of the second lens, 'T3' is the center thickness of the third lens, 'T4' is the center thickness of the fourth lens, and 'T5' is the center thickness of the fifth lens).

5. The lens assembly of any one of claims 1 to 4, wherein a distance from the aperture stop to an object-side surface of the second lens is 0.55mm or more and 1.4mm or less.

6. The lens assembly of any one of claims 1 to 5, wherein the lens assembly satisfies the following [Conditional

Expression 4],

$$[\text{Conditional Expression 4}]$$

$$0.13 < D4/TTL < 0.37$$

(where 'D4' is the distance from the aperture stop to the object-side surface of the second lens, measured along the optical axis).

7. The lens assembly of any one of claims 1 to 6, wherein the third lens has a positive refractive power, and the fourth lens has a negative refractive power.

8. The lens assembly of any one of claims 1 to 7, wherein the third lens includes a convex image sensor-side surface.

9. The lens assembly of any one of claims 1 to 8, wherein the fifth lens includes a convex object-side surface.

10. The lens assembly of any one of claims 1 to 9, wherein the fifth lens includes at least one inflection point (IP) disposed on at least one of the object-side surface and the image sensor-side surface thereof.

11. An electronic device (101; 102; 104; 300) comprising:

the lens assembly (210; 400; 500; 600; 700; 800; 900; 1000) of any one of claims 1 to 10; and
a processor (120; 260) configured to obtain an object image using the lens assembly.

FIG. 1

EP 4 644 965 A1

FIG. 2

FIG. 3

# FIG. 4

FIG. 5

LONGITUDINAL SPHERICAL ABER.

| | 656.2725 NM |
| | 587.5618 NM |
| | 546.0740 NM |
| | 486.1327 NM |
| | 435.8343 NM |

FOCUS:mm

# FIG. 6

ASTIGMATIC FIELD CURVES

DISTORTION

FIG. 7

FIG. 8

FIG. 9

LONGITUDINAL SPHERICAL ABER.

| | 656.2725 NM |
| --- | --- |
| | 587.5618 NM |
| | 546.0740 NM |
| | 486.1327 NM |
| | 435.8343 NM |

FOCUS:mm

# FIG. 10

ASTIGMATIC FIELD CURVES

FIG. 11

DISTORTION

FIG. 12

# FIG. 13

LONGITUDINAL SPHERICAL ABER.

FIG. 14

ASTIGMATIC FIELD CURVES

IMG HT

T  S  2.80

2.10

1.40

0.70

-0.10  -0.05  0.0  0.05  0.10

FOCUS:mm

DISTORTION

IMG HT

2.80

2.10

1.40

0.70

-5.0  -2.5  0.0  2.5  5.0

DISTORTION:%

FIG. 15

FIG. 16

FIG. 17

LONGITUDINAL SPHERICAL ABER.

| | 656.2725 NM |
| | 587.5618 NM |
| | 546.0740 NM |
| | 486.1327 NM |
| | 435.8343 NM |

FOCUS:mm

FIG. 18

FIG. 19

FIG. 20

FIG. 21

LONGITUDINAL SPHERICAL ABER.

FIG. 22

ASTIGMATIC FIELD CURVES

IMG HT

S ⟨ 2.80 T

2.10

1.40

0.70

-0.10 -0.05 0.0 0.05 0.10

FOCUS:mm

# FIG. 23

DISTORTION

IMG HT

2.80

2.10

1.40

0.70

-5.0 -2.5 0.0 2.5 5.0

DISTORTION:%

# FIG. 24

FIG. 25

LONGITUDINAL SPHERICAL ABER.

Legend:
- 656.2725 NM
- 587.5618 NM
- 546.0740 NM
- 486.1327 NM
- 435.8343 NM

FOCUS:mm

FIG. 26

ASTIGMATIC FIELD CURVES
IMG HT

FIG. 27

DISTORTION
IMG HT

FIG. 28

FIG. 29

LONGITUDINAL SPHERICAL ABER.

FIG. 30

ASTIGMATIC FIELD CURVES

IMG HT

T S

2.90

2.18

1.45

0.73

-0.10  -0.05  0.0  0.05  0.10

FOCUS:mm

# FIG. 31

DISTORTION

IMG HT

2.90

2.18

1.45

0.73

-5.0  -2.5  0.0  2.5  5.0

DISTORTION:%

# FIG. 32

**EP 4 644 965 A1**

## INTERNATIONAL SEARCH REPORT

International application No.

**PCT/KR2024/095235**

### A.    CLASSIFICATION OF SUBJECT MATTER

**G02B 13/00**(2006.01)i; **G02B 9/60**(2006.01)i; **G03B 9/02**(2006.01)i; **H04M 1/02**(2006.01)i; **G02B 3/02**(2006.01)i; **G02B 3/00**(2006.01)i

According to International Patent Classification (IPC) or to both national classification and IPC

### B.    FIELDS SEARCHED

Minimum documentation searched (classification system followed by classification symbols)

G02B 13/00(2006.01); G02B 13/18(2006.01); H04N 23/00(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제5 렌즈(fifth lens), 조리개(stop), 화각(FOV, field of view), 두께(thickness), 굴절력 (refractive power), TTL(total track length), 변곡점(inflection point), 상고(image height)

### C.    DOCUMENTS CONSIDERED TO BE RELEVANT

| Category* | Citation of document, with indication, where appropriate, of the relevant passages | Relevant to claim No. |
|---|---|---|
| X | KR 10-2022-0059568 A (APPLE INC.) 10 May 2022 (2022-05-10)<br>    See paragraphs [0047]-[0081], [0138], [0151] and [0157] and figure 7a. | 1,5-11 |
| X | JP 2022-051649 A (RAYTECH OPTICAL CHANGZHOU CO., LTD.) 01 April 2022 (2022-04-01)<br>    See paragraphs [0001], [0020]-[0056] and [0092] and figure 1. | 1,3,11 |
| X | JP 2016-018001 A (KANTATSU CO., LTD.) 01 February 2016 (2016-02-01)<br>    See paragraphs [0001], [0030]-[0036] and [0045] and figure 1. | 1,11 |
| A | JP 2009-294527 A (FUJINON CORP.) 17 December 2009 (2009-12-17)<br>    See paragraphs [0021]-[0031] and figures 1 and 16. | 1-11 |
| A | JP 2013-228412 A (KANTATSU CO., LTD.) 07 November 2013 (2013-11-07)<br>    See paragraphs [0033]-[0045] and [0059] and figure 1. | 1-11 |

☐ Further documents are listed in the continuation of Box C.          ☑ See patent family annex.

| | |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **21 May 2024** | **21 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/095235**

| Patent document cited in search report | | | Publication date (day/month/year) | Patent family member(s) | | | Publication date (day/month/year) |
|---|---|---|---|---|---|---|---|
| KR | 10-2022-0059568 | A | 10 May 2022 | CN | 111279240 | A | 12 June 2020 |
| | | | | CN | 111279240 | B | 28 April 2023 |
| | | | | CN | 116520532 | A | 01 August 2023 |
| | | | | EP | 3701308 | A1 | 02 September 2020 |
| | | | | KR | 10-2020-0060447 | A | 29 May 2020 |
| | | | | KR | 10-2394795 | B1 | 09 May 2022 |
| | | | | KR | 10-2601049 | B1 | 09 November 2023 |
| | | | | US | 10921558 | B2 | 16 February 2021 |
| | | | | US | 11899176 | B2 | 13 February 2024 |
| | | | | US | 2019-0129149 | A1 | 02 May 2019 |
| | | | | US | 2021-0165194 | A1 | 03 June 2021 |
| | | | | WO | 2019-083817 | A1 | 02 May 2019 |
| JP | 2022-051649 | A | 01 April 2022 | CN | 111929843 | A | 13 November 2020 |
| | | | | CN | 111929843 | B | 18 December 2020 |
| | | | | JP | 6991695 | B1 | 12 January 2022 |
| | | | | US | 11835792 | B2 | 05 December 2023 |
| | | | | US | 2022-0091380 | A1 | 24 March 2022 |
| | | | | WO | 2022-062072 | A1 | 31 March 2022 |
| JP | 2016-018001 | A | 01 February 2016 | CN | 204188872 | U | 04 March 2015 |
| | | | | JP | 6300410 | B2 | 28 March 2018 |
| | | | | US | 10185122 | B2 | 22 January 2019 |
| | | | | US | 2016-0004043 | A1 | 07 January 2016 |
| | | | | US | 2016-0259151 | A1 | 08 September 2016 |
| | | | | US | 9341823 | B2 | 17 May 2016 |
| JP | 2009-294527 | A | 17 December 2009 | CN | 201503515 | U | 09 June 2010 |
| | | | | JP | 5021565 | B2 | 12 September 2012 |
| | | | | TW | M368072 | U | 01 November 2009 |
| JP | 2013-228412 | A | 07 November 2013 | CN | 203178554 | U | 04 September 2013 |
| | | | | JP | 5894838 | B2 | 30 March 2016 |
| | | | | US | 2013-0258499 | A1 | 03 October 2013 |
| | | | | US | 2015-0316752 | A1 | 05 November 2015 |
| | | | | US | 9110270 | B2 | 18 August 2015 |
| | | | | US | 9638898 | B2 | 02 May 2017 |

Form PCT/ISA/210 (patent family annex) (July 2022)